# EUROPEAN PATENT APPLICATION

(11) **EP 4 811 290 A1**
(43) Date of publication of application: **23.09.2026**
(21) Application number: 25209624.3
(22) Date of filing: 17.10.2025
(51) Int. Cl.: G06T 9/00, H04N 19/597

(54) **VOLUMETRIC CONTENT DATA PROCESSING SYSTEMS AND METHODS**

(30) Priority: 19.03.2025 EP 25164871; 26.03.2025 EP 25166480
(71) Applicant: Koninklijke KPN N.V., 3072 AP Rotterdam (NL); Nederlandse Organisatie voor Toegepast-Natuurwetenschappelijk Onderzoek TNO, 2595 DA 's-Gravenhage (NL)
(72) Inventor: Subramanyam, Shishir, 1062 HJ Amsterdam (NL); Cernigliaro, Gianluca, 2591 DA Den Haag (NL)
(74) Representative: De Vries & Metman

(57) **Abstract**

A volumetric content data processing system for processing first volumetric content data comprising first volumetric geometry data and first volumetric attribute data is described wherein the processing system comprises a memory and at least one processor, coupled to the memory, wherein the at least one processor is configured to: -perform a first encoding process (ENC-1(G)) on the first volumetric geometry data to obtain encoded volumetric geometry data; perform a first decoding process (DEC-1(G)) on the encoded volumetric geometry data to obtain second volumetric geometry data; generate video attribute data comprising at least one video attribute frame with attribute patches from the first volumetric attribute data using the second volumetric geometry data; -generate projection information that is used to generate the video attribute data comprising the at least one video attribute frame with attribute patches; execute at least one downscaling operation on the video attribute data to generate second video attribute data; perform a second encoding process (ENC-2(A)) on the second video attribute data to generate encoded video attribute data, wherein the second video attribute data is determined in an evaluation process using at least one trained attribute neural network and, optionally, based on at least one evaluation metric; provide a bitstream comprising at least the encoded volumetric geometry data and the encoded video attribute data wherein the projection information is contained in the bitstream or associated with the bitstream.

## Description

### FIELD OF THE INVENTION

This disclosure relates to a volumetric content data processing system and method, both for the encoding side where the data is encoded for storage or transmission and for the decoding side where the data is decoded for storing or play-out of the volumetric content.

### BACKGROUND

Volumetric video compression has been a topic of investigation and standardization for nearly a decade. Such activities use point clouds or meshes of points for representing video. A point cloud is a three-dimensional data representation used in diverse applications. Graziosi et al provide an overview of ongoing point cloud compression standardization activities for Video-based Point Cloud Compression (V-PCC) in APSIPA Transactions on Signal and Information Processing: Vol. 9: No. 1, e13 (http://dx.doi.org/10.1017/ATSIP.2020.12). V-PCC relies on the use of traditional two-dimensional video codecs, such as advanced video coding (AVC, also known as H.264) and high efficiency video coding (HEVC, also known as H.265). Point cloud data, for V-PCC, is converted into different types of video frames, such as attribute, geometry and occupancy frames. The codecs on which V-PCC relies are used to encode these video frames. At the decoder side these encoded video frames are decoded and subsequently used to reconstruct the point cloud data.

ISO/IEC 23090-5:2023(E) is an international standard for Visual Volumetric Video-based Coding (V3C) and Video-based Point Cloud Compression (V-PCC) describing, amongst others, the use of an atlas to reconstruct a point cloud from attribute, geometry and occupancy frames. An atlas is a collection of 2d patches and their associated information placed onto a rectangular frame corresponding to a volume in 3D space on which volumetric data is rendered. The standard specifies a coded V3C bitstream comprising V3C units comprising the attribute, geometry and occupancy frames. In addition, the V3C bitstream comprises an atlas (sub-)bitstream in a V3C atlas unit. The atlas (sub-)bitstream forms a sequence of bits that forms the representation of atlas frames. An atlas frame is a 2D rectangular array of atlas samples onto which patches are projected and additional information related to the patches, corresponding to a volumetric frame. The atlas frame is also referred to as atlas information or atlas data.

Another Point Cloud Compression technology is Geometry-based Point Cloud Compression (G-PCC). In G-PCC, geometry and attributes are encoded separately. The compressed geometry is typically represented as an octree from the root all the way down to a leaf level of individual voxels or a leaf level of blocks larger than voxels plus a model that approximates the surface within each leaf of the pruned octree (triangle soup).

Compression technologies are needed to reduce the amount of data required to represent media content. Point cloud compression methods and standards such as V-PCC have provided the very first set of volumetric video codecs, with only partially satisfactory results in terms of rate distortion performance. For this reason, the MPEG standardization body is developing an AI-based Point Cloud Compression (Al-PCC) standard aiming at improving such performance. AI-based PCC is an innovative approach to compressing and processing 3D point cloud data using deep learning techniques. Recently, a call for proposals (CfP) was issued by MPEG in ISO/IEC JTC 1/SC 29/WG2 for AI based point cloud coding. The document refers to several use cases, including immersive technologies (such as virtual reality (VR)/augmented reality (AR)) wherein dense point clouds are captured and autonomous navigation and robotics relying on sparse point clouds.

### SUMMARY

The present disclosure pertains to a volumetric content data processing system for both the encoder side and decoder side configured to process volumetric geometry data and volumetric attribute data. The processing entails providing an encoded bitstream comprising encoded volumetric geometry data and encoded video attribute data representing the volumetric attribute data. The processing also entails processing an encoded bit stream comprising encoded volumetric geometry data and encoded video attribute data to generate reconstructed volumetric content.

One aspect of the disclosure involves a volumetric content data processing system for processing first volumetric content data comprising first volumetric geometry data and first volumetric attribute data. The processing system comprises a memory and at least one processor, coupled to the memory. The memory may be used to store software code portions for the at least one processor to perform one or more of its tasks. The memory may also be used to store, possibly temporarily, processing results from the processor, such as during an operating cycle.

The at least one processor may be configured to perform a first encoding process on the first volumetric geometry data to obtain encoded volumetric, i.e. three-dimensional, geometry data. The at least one processor may further be configured to perform a first decoding process on the encoded volumetric geometry data to obtain second volumetric geometry data.

The at least one processor may further be configured to generate video attribute data comprising at least one video attribute frame, i.e. a two-dimensional data frame, with attribute patches from the first volumetric attribute data using the second volumetric geometry data. Such a data frame is known from V-PCC based systems, for example. For this process, traditional two-dimensional video codecs, such as advanced video coding (AVC, also known as H.264) and high efficiency video coding (HEVC, also known as H.265), or VVC, may be used. The at least one processor may further be configured to execute at least one downscaling operation on the video attribute data to generate second video attribute data and to perform a second encoding process on the second video attribute data to generate encoded video attribute data. In one embodiment, the second video attribute data is determined in an evaluation process using at least one trained attribute neural network and, optionally, based on at least one evaluation metric. The at least one processor may further be configured to provide a bitstream comprising at least the encoded volumetric geometry data and the encoded video attribute data.

The evaluation metric may be based on a comparison of attribute data (in the two-dimensional, video domain) and/or a comparison of full point cloud data (in the three-dimensional, volumetric domain). Such evaluation metric may comprise, for example, a quality metric, such as peak signal-to-noise ratio, PSNR, a subjective metric, or a rate distortion metric. Rate distortion can be expressed as a cost wherein the loss of video quality and the amount of data required to encode the video are taken into account. A rate distortion optimization optimizes the balance between amount of data and data quality.

One aspect of the disclosure pertains to a volumetric content data processing system for processing an encoded bitstream comprising encoded volumetric geometry data and encoded video attribute data representing volumetric attribute data. The processing system may comprise a memory and at least one processor, coupled to the memory. The memory may be used to store software code portions for the at least one processor to perform one or more of its tasks. The memory may also be used to store, possibly temporarily, processing results from the processor, such as during an operating cycle.

The at least one processor may be configured to perform a first decoding operation on the encoded volumetric geometry data of the bitstream to obtain second volumetric geometry data. The at least one processor may further be configured to generate video geometry data comprising at least one video geometry frame with geometry patches and occupancy data based on the second volumetric geometry data.

The at least one processor may further be configured to perform a second decoding operation on the encoded video attribute data of the bitstream to obtain second video attribute data comprising at least one video attribute frame with attribute patches. The at least one processor may further be configured to perform an upscaling operation on the second video attribute data to obtain first video attribute data using at least one trained attribute neural network. Since the data is now available in the two-dimensional domain, the at least one processor may further be configured to generate first volumetric content data using a mapping operation on the geometry video data, the first video attribute data and occupancy data.

It is noted that, in order to generate the video attribute data at the encoding side system, the system makes use of the second volumetric geometry data obtained by encoding and decoding the first volumetric geometry data so that the second volumetric geometry data correspond exactly to the volumetric geometry data obtained at the decoding side after decoding.

In an aspect, the embodiments may relate to a volumetric content data processing system for processing first volumetric content data comprising first volumetric geometry data and first volumetric attribute data, the processing system comprising a memory and at least one processor, coupled to the memory, wherein the at least one processor is configured to:
perform a first encoding process (ENC-1(G)) on the first volumetric geometry data to obtain encoded volumetric geometry data;
perform a first decoding process (DEC-1(G)) on the encoded volumetric geometry data to obtain second volumetric geometry data;
generate video attribute data comprising at least one video attribute frame with attribute patches from the first volumetric attribute data using the second volumetric geometry data;
generate projection information that is used to generate the video attribute data comprising the at least one video attribute frame with attribute patches;
execute at least one downscaling operation on the video attribute data to generate second video attribute data;
perform a second encoding process (ENC-2(A)) on the second video attribute data to generate encoded video attribute data, wherein the second video attribute data is determined in an evaluation process using at least one trained attribute neural network and, optionally, based on at least one evaluation metric;
provide a bitstream comprising at least the encoded volumetric geometry data and the encoded video attribute data wherein the projection information is contained in the bitstream or associated with the bitstream.

In an embodiment, the projection information may be contained in one or more NAL units, preferably one or more non-VCL NAL units, in the bitstream or in one or more SEI messages in the bitstream.

In an embodiment, the projection information includes one or more projection parameters are that are used in the generation of the video attribute data, preferably the generation including projecting 3D volumetric data onto on 2D patches, the one or more projection parameters including at least one of:
- one or more 3D normal estimation parameters
- one or more segmentation parameters
- one or more patch generation parameters
- one or more projection parameters

In a further aspect, the embodiments may relate to a volumetric content data processing system for processing a bitstream comprising encoded volumetric geometry data and encoded video attribute data, representing volumetric attribute data, the bitstream further comprising or being associated with projection information that was used to generate the encoded video attribute data: the processing system comprising a memory and at least one processor, coupled to the memory, wherein the at least one processor is configured to:
perform a first decoding operation (DEC-1(G)) on the encoded volumetric geometry data of the bitstream to obtain second volumetric geometry data and on or more projection parameters ;
generate at least video geometry data comprising at least one video geometry frame with geometry patches and occupancy data based on the second volumetric geometry data and the projection information;
perform a second decoding operation (DEC-2(A)) on the encoded video attribute data of the bitstream to obtain second video attribute data comprising at least one video attribute frame with attribute patches;
perform an upscaling operation (US(A)) on the second video attribute data to obtain first video attribute data using at least one trained attribute neural network; and
generate first volumetric content data using a mapping operation on the video geometry data, the first video attribute data and the occupancy data.

In a preferred embodiment, the first volumetric content data is a voxelized version of original point cloud data. Such voxelized versions are generated by voxelization of the original point cloud data. Voxelization involves segmenting a 3D object into small cubic portions, generally referred to as voxels. In the process of voxelization, preferably pixel data points (colour/attribute data) are determined for voxels, based on pixel data points of the original point cloud data.

The applicants have considered that recent developments have focussed on neural network assisted encoding and decoding particularly for the geometry data of point clouds.

Encoding and decoding of geometry data in the present disclosure may be executed according to AI-PCC as described in the background, or a derivative thereof.

Furthermore, for example, Zaghetto et al published ISO/IEC JTC 1/SC 29/WG 7, m62679, in 2023 an investigation of the potential of combining deep point cloud compression, DPCC and V-PCC within a hybrid framework. To that end, Zaghetto et all propose as improvements (a) a novel predictor network; (b) unified I- and P-frame compression networks; (c) a modulation network that allows for a single trained model to operate over a discrete set of rate points; and (d) an interpolation strategy between the gain/inverse gain vectors to encode point clouds at any arbitrary target bitrate within the trained bitrate range.

Moreover, recently, Lodhi et al proposed a coding framework design for MPEG AI-PCC in ISO/IEC JTC 1/SC 29/WG 7, m70282, that uses a unified fully hierarchical model for dynamic point cloud compression exploiting both geometry feature coding and octree-based geometry coding as will be described below in a bit more detail. The design from Lodhi et al uses a slicing mechanism that partitions the input point cloud into a number of slices, which number is signalled to the decoder in the bitstream. Such a slice or such slices of the point cloud may represent the first volumetric content data disclosed herein.

However, applicants have found that neural networks can be beneficially exploited for the attribute data of point clouds. In particular, applicants have found that downscaling video attribute frames before encoding may further reduce the bitstream size. In an embodiment, the volumetric content data processing system at the encoding side may use a fixed downscaling factor, which would be predetermined and thus known in advance at the decoding side. This obviates the need for signalling the downscaling factor. In an alternative embodiment, the downscaling factor may be signalled to the decoding side, for example using a Supplemental Enhancement Information, SEI, message comprising the downscaling factor (or the inverse, which would be an upscaling factor to reverse the downscaling). Trained attribute neural networks at the encoding side and decoding side are used to upscale, at the decoding side, the downscaled video attribute frames, in a manner that substantially reverses the quality loss caused by the downscaling operation. Optimization of the encoding, including determining a downscaling factor and a trained neural network for upscaling, could be based on training data (e.g. MPEG standard picture sequences) such that for encoding further video, an optimized downscaling factor and trained neural network could be preconfigured. This saves time and resources.

Evaluation metric determination may also be used for training the at least one attribute neural network. In one embodiment, the at least one trained attribute neural network has been trained using a predetermined collection of at least training video frames with attribute patches and corresponding downscaled training video frames with attribute patches and providing these video frames to an at least one attribute neural network for upscaling the downscaled training video frames with attribute patches, and subsequent comparison to the training video frames with attribute patches. It should be noted that the training video frames that have been downscaled and upscaled may have been exposed to further operations, including encoding and decoding as is also done during operation of the video processing system at the encoding side.

Multiple training cycles may be applied to determine appropriate weights for the neural network(s). The training may involve comparison of metrics, such as absolute quality, for example PSNR, and/or a rate distortion metric, as will be further explained with reference to the detailed description of the drawings. The embodiment facilitates determination of the metrics, if any, for the upscaled video attribute data in operation. The collection may be from an MPEG library. One example of a library can be found at JPEG Pleno Database: 8i Voxelized Full Bodies (8iVFB v2) - A Dynamic Voxelized Point Cloud Dataset (https://plenodb.jpeg.org/pc/8ilabs) or Real World Textured Things (https://texturedmesh.isti.cnr.it/).

Metric determination may not be necessary if the video processing system applies a single neural network for attribute data by default. This may occur if only one neural network is available and/or used, for example. This may occur if the neural network is used for various upscaling settings, for example. In such situation, the video processing system at the decoding side may only need to be informed that a neural network should be applied, possibly receiving neural network information, such as weight coefficients, from the video processing system at the encoding side.

In other embodiments, the evaluation process may determine whether the downscaling operation is appropriate in relation to an evaluation metric. Embodiments of such an evaluation metric will be described below in more detail. In such embodiments, information may need to be signalled to the decoding side system, as will be described in further detail herein.

Particularly, if downscaling is not fixed, in one embodiment, the at least one processor of the system at the encoding side may be configured to execute the evaluation process on the generated video attribute data. The evaluation process may comprise one or more cycles. A cycle may comprise at least one downscaling operation, a process of encoding and subsequent decoding and an upscaling evaluation process. One cycle comprises at least executing at least one downscaling operation on the generated video attribute data to generate downscaled video attribute data. The cycle may further comprise executing a process of encoding and decoding of the downscaled video attribute data to generate third video attribute data and executing an upscaling evaluation process.

The upscaling evaluation process may comprise one or more cycles of upscaling and, optionally, metric determination for the upscaled data. For example, the upscaling evaluation process may comprise one cycle. The upscaling evaluation process may also contain more than one cycle. These one or more cycles may occur within the evaluation process. One cycle may comprise upscaling the third video attribute data using at least one trained attribute neural network to generate upscaled video attribute data and determining at least one evaluation metric for the upscaled video attribute data.

**In** one embodiment, the at least one processor may further be configured to select a trained attribute neural network based on the determined at least one evaluation metric and to provide attribute neural network information in connection, for example within, with the bitstream.

The at least one processor may further be configured to provide a bitstream comprising encoded video attribute data representing the encoded second video attribute data determined in accordance with the evaluation metric. In this manner, video attribute data associated with volumetric content, such as a point cloud, may be more efficiently encoded than with conventional methods. The downscaled attribute data are encoded at a lower bitrate, whilst selecting a trained attribute neural network, specifically trained for optimized upscaling of video attribute data, that allows for upscaling to the original resolution at an optimized objective quality or subjective quality and/or optimized (lowest) Rate-Distortion cost.

In one embodiment, the at least one processor of the system at the decoding side is further configured to receive attribute neural network information associated with a selected trained attribute neural network and to execute the upscaling operation on the second video attribute data using the selected attribute neural network in accordance with the received information to generate the first video attribute data.

The disclosed systems enable evaluation whether and/or to what extent downscaling of two-dimensional image frames representing volumetric attribute data, using a specific downscaling operation can be exploited beneficially by applying an upscaling process using at least one trained attribute neural network at a decoding side. To that end, the disclosed system at the encoding side upscales the video attribute data using one or more trained attribute neural networks. The system may determine a metric for the upscaled video attribute data to evaluate the effect of the downscaling operation on the metric and select an associated neural network for the processing system at the decompression side to reconstruct the video data or volumetric data in dependence on the evaluation.

In particular, in one embodiment the at least one processor is further configured to determine the at least one attribute metric as the evaluation metric for the upscaled video attribute data based on a comparison of the upscaled video attribute data with the generated video attribute data comprising the at least one video attribute frame with attribute patches. The embodiment envisages determining the evaluation metric in the, two-dimensional, video domain.

The attribute metric may be based on a comparison of attribute data. Such metric may comprise, for example, a quality metric, such as peak signal-to-noise ratio, PSNR, a subjective metric, or a rate distortion metric. A quality metric may be used by determining a quality difference between the upscaled video attribute data and the generated video attribute data. Rate distortion can be expressed as a cost wherein the loss of video quality and the amount of data required to encode the video are taken into account. A rate distortion optimization, RDO, metric may optimize the balance between amount of data and data quality.

In one embodiment, the at least one processor is further configured to determine the at least one evaluation metric for the upscaled video attribute data based on a comparison of third volumetric content data with the first volumetric content data. The third volumetric content data may be obtained by generating video geometry data comprising at least on video geometry frame with geometry patches and occupancy data from the second volumetric geometry data and performing a mapping operation on the upscaled video attribute data, the geometry video data and the occupancy data to generate the third volumetric content data. The embodiment envisages determining the evaluation metric in the, three-dimensional, volumetric content domain. Again, the evaluation metric may be a quality metric or a rate distortion optimization, RDO, metric.

In one embodiment, the at least one processor of the system is configured to generate reconstructed volumetric attribute data from the second volumetric geometry data and the first volumetric content data or first volumetric attribute data and generate the video attribute data comprising at least one video frame with attribute patches from the reconstructed volumetric attribute data. The embodiment facilitates projection of original attributes (e.g. colours) on the second volumetric geometry data, so that recoloured volumetric content data is obtained. Each voxel of the reconstructed point cloud may now have an assigned attribute (e.g. colour) which makes that a substantially exact matching is obtained.

Optionally, the at least one processor may also generate geometry video data comprising at least one geometry video frame with geometry patches and occupancy data based on the reconstructed volumetric content data. This data may be useful in processing as described herein in further detail. For example, geometry video frames may be useful in three-dimensional rate distortion optimization as described above.

In one embodiment, the at least one processor of the system is further configured to perform the first encoding process on the first volumetric geometry data to obtain encoded volumetric geometry data using a geometry neural network module.

In one embodiment, the at least one processor of the system is further configured to perform the first decoding operation using a geometry neural network module to obtain the second volumetric geometry data.

The embodiments beneficially exploit AI-assisted bitstream size reduction using neural networks for both the geometry data and attribute data of volumetric content. The geometry neural network module may, for example, use or benefit from the approach disclosed in ISO/IEC JTC 1/SC 29/WG 7, m62679 or ISO/IEC JTC 1/SC 29/WG 7, m70282 described above. For example, the geometry neural network may use feature encoding and octree encoding, for example. Octree-based coding uses predicted occupancy probability distributions for arithmetic encoding and decoding of occupancy symbols. Then, prior to feature encoding, the octree geometry is transformed into a latent feature space through a neural network. The actual feature encoding comprises the removing of redundant information, a prediction stage to prepare for efficient compression and the actual compression step using an entropy encoder.

In one embodiment, the at least one processor of the system is configured to generate projection information and provide the generated projection information in the bitstream or in association with the bitstream for the system at the decoding side. The projection information assists the system at the decoding side to reconstruct the volumetric content data.

In one embodiment, the at least one processor is further configured to further generate video attribute data with default attribute patches, in addition to the video geometry data and the occupancy data, based on default volumetric attribute data. The video attribute data with the default attribute patches may subsequently be substituted, i.e. replaced, by the first video attribute data before performing the mapping operation.

The use of the default attribute data assist in generating video frames with patches using a conventional patch generator. The output video attribute data with default attribute patches may then be substituted with the actual video attribute frame contained in the bitstream to generate the volumetric content data.

In one embodiment, the at least one processor is further configured to add the first video attribute data from the upscaling operation to the video geometry data and the occupancy data before performing the mapping operation. This embodiment avoids the use of default attribute data. If needed, the patch generator for generation of at least video geometry data with geometry patches and occupancy data based on the second volumetric geometry data may not require input of attribute data. Optionally, the patch generator may be provided an attribute data absence notification notifying the generation process on the absence of attribute data or with an attribute data removal operation removing attribute data before performing the mapping operation.

In one embodiment, the at least one processor, at the decoding side, is further configured to generate the first volumetric content data using the mapping operation and the second volumetric geometry data. Such an embodiment enables geometry drift compensation that may result if only the video geometry data would be used to generate the first volumetric content data. The second volumetric geometry data may be used, for example, in a recolouring operation.

In an embodiment, an association between encoded volumetric geometry data and the encoded video attribute data is explicitly signalled by association information, such as attribute-to-geometry association information.

In an embodiment, the encoded video attribute data is encoded in a HEVC or VVC format, the encoded video attribute data preferably being comprised in a first sub-stream in the bitstream, preferably the association information, such as attribute-to-geometry association information, being signalled in the first sub-stream.

In an embodiment, the encoded volumetric geometry data is comprised in a second sub-stream in the bitstream.

In further embodiments, at least one of the first sub-stream and the second sub-stream may be comprised in a track, the track defined by an encapsulation format, such as an encapsulation format based on the ISO BMFF standards.

It is observed that although the bitstream received by the decoding side system is said to comprise the first and second sub-stream, in embodiments of the invention the first and second sub-stream may be separately or independently received by the system.

For example an ISO BMFF based encapsulation format allows for requesting tracks separately and independently.

The sub-streams may, but are not necessarily, provided to different decoder instances, handling the different decoding operations.

In embodiments, the attribute-to-geometry association information may optionally comprise an identifier of the second sub-stream.

In embodiments, the attribute-to-geometry association information may optionally comprise timing information for associating a first time instant, preferably an attribute video frame, of the encoded video attribute data, with a time instant, preferably a geometry data frame (i.e. a point cloud frame comprising geometry data) of the encoded volumetric geometry data. The attribute video frame and/or the geometry data frame may each be associated with a frame identifier. The respective frame identifiers may be correlated in the attribute-to-geometry association information.

In embodiments, the association information, for example the attribute-to-geometry association information, may be formatted as an SEI message or VUI data.

In further embodiments the aforementioned attribute-to-geometry association information may be comprised in an encapsulation format, such as an ISO BMFF encapsulation format.

These embodiments allow for a decoding side system, wherein the decoding of the encoded volumetric geometry data and the encoded video attribute data, and the subsequent reconstruction of the point cloud data is less tightly integrated. The bitstream received on the decoding side system may comprise two different sub-streams, each input to a distinct decoder. **In** an implementation, the bitstream comprises timing information, such that the output of the decoder instances is tightly time-locked, allowing for the recolouring and other reconstruction process steps to be performed in a synchronized fashion as well. When the bitstream lacks the timing information or the sub-streams are received separate from each other at different decoder instances, the signalling information as mentioned above, facilitates the point cloud reconstruction process.

Other aspects of the disclosure relate to a computer-implemented method for steps as disclosed herein in an encoding side system and to a computer-implemented method for steps as disclosed herein in an decoding side system.

In one embodiment, the bitstream received by the at least one processor at the decoding side system further comprises projection information. The projection information assists the system at the decoding side to reconstruct the volumetric content data.

In particular, the disclosure pertains to a computer-implemented method for processing first volumetric content data comprising first volumetric geometry data and first volumetric attribute data. The method may include steps of performing a first encoding process on the first volumetric geometry data to obtain encoded volumetric geometry data and performing a first decoding process on the encoded volumetric geometry data to obtain second volumetric geometry data. The method may further comprise the step of generating video attribute data comprising at least one video attribute frame with attribute patches from the first volumetric attribute data using the second volumetric geometry data. A further step may involve executing at least one downscaling operation on the video attribute data to generate second video attribute data. A still further step may include, performing a second encoding process on the second video attribute data to generate encoded video attribute data, wherein the second video attribute data is determined in an evaluation process using at least one trained attribute neural network and, optionally, based on at least one evaluation metric. A further step may include providing a bitstream comprising at least the encoded volumetric geometry data and the encoded video attribute data.

Furthermore, the disclosure involves a computer-implemented method for processing a bitstream comprising encoded volumetric geometry data and encoded video attribute data, representing volumetric attribute data. The method may involve the step of performing a first decoding operation on the encoded volumetric geometry data of the bitstream to obtain second volumetric geometry data. The method may further involve generating at least video geometry data comprising at least one video geometry frame with geometry patches and occupancy data based on the second volumetric geometry data and performing a second decoding operation on the encoded video attribute data of the bitstream to obtain second video attribute data comprising at least one video attribute frame with attribute patches. A further step may involve performing an upscaling operation on the second video attribute data to obtain first video attribute data using at least one trained attribute neural network. Moreover, a step may involve generating first volumetric content data using a mapping operation on the video geometry data, the first video attribute data and the occupancy data.

Yet another aspect of a disclosure pertains to a computer program product comprising software code portions that, if run by at least one processor, perform the steps of such a computer-implemented method.

A still further aspect of the disclosure involves a content system comprising an encoding side system and a decoding side system as disclosed herein.

As will be appreciated by one skilled in the art, aspects of the present invention may be embodied as a system, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object-oriented programming language such as Java(TM), Smalltalk, C++ or the like and conventional procedural programming languages, such as the "C" programming language or similar programming languages. The program code may execute entirely on the person's computer, partly on the person's computer, as a stand-alone software package, partly on the person's computer and partly on a remote computer, or entirely on the remote computer or server. In the latter scenario, the remote computer may be connected to the person's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

Moreover, a computer program for carrying out the methods described herein, as well as a non-transitory computer readable storage-medium storing the computer program are provided.

Elements and aspects discussed for or in relation with a particular embodiment may be suitably combined with elements and aspects of other embodiments, unless explicitly stated otherwise. Embodiments of the present invention will be further illustrated with reference to the attached drawings, which schematically will show embodiments according to the invention. It will be understood that the present invention is not in any way restricted to these specific embodiments.

### BRIEF DESCRIPTION OF THE DRAWINGS

Aspects of the invention will be explained in greater detail by reference to exemplary embodiments shown in the drawings, in which:
FIG. 1 is a schematic illustration of a video point cloud compression, V-PCC, system comprising a compression side preparing the video point cloud data for transmission or storage and a decompression side preparing the video point cloud data to be played;
FIGS. 2A and 2B are schematic illustrations of a first embodiment of a volumetric content data processing system at the encoding side system and decoding side system, respectively, comprising downscaling resp. upscaling operation using at least one trained attribute neural network.;
FIGS. 3A and 3B schematically illustrate a second and third embodiment of a volumetric content data processing system for an encoding side system;
FIGS. 3C and 3D schematically illustrate a second and third embodiment of a volumetric content data processing system for a decoding side system;
FIG. 3E represents a fourth embodiment of a volumetric content data processing system for a decoding side system;
FIG. 3F provides a simplified illustration of a recolouring operation as applied in both the encoder side system and the decoder side system as disclosed herein;
FIGS. 4A and 4B schematically illustrate a fourth and fifth embodiment of a volumetric content data processing system for an encoding side system;
FIGS. 5A and 5B schematically depict embodiments for attribute neural network training to obtain one or more trained attribute neural networks for the video content data processing system;
FIGS. 6A and 6B a high level schematic of an encoder and a decoder for processing volumetric data
Fig. 7C and 7D illustrate the process of projecting point cloud data representing an object (in this example a 3D letter) onto a projection plane
Fig. 8A-8D depict an example of a point cloud reconstruction process based on 2D patches and associated metadata
FIG. 9 depicts a block diagram illustrating an exemplary processing system according to a disclosed embodiment.
FIGS. 10A-10D are figures and experimental results from applying an embodiment of the disclosed encoding system.

### DETAILED DESCRIPTION OF THE DRAWINGS

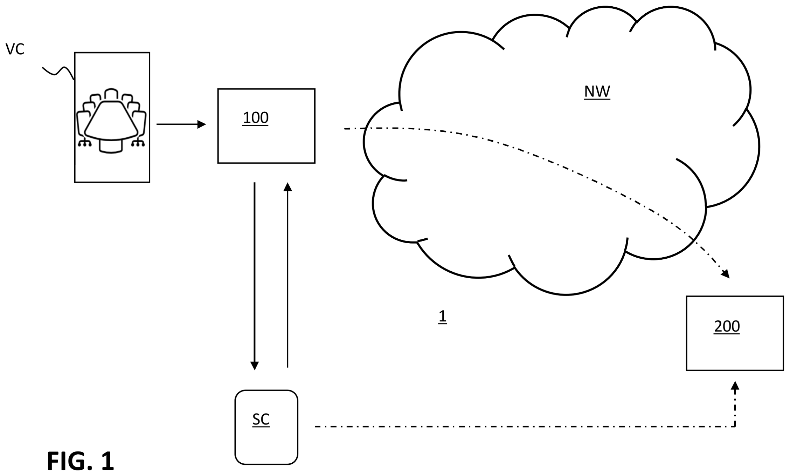

FIG. 1 is a schematic illustration of a point cloud compression, PCC, system 1 comprising a compression side or encoding side system 100 and a decompression side or decoding side system 200. Compression side system 100 receives volumetric content VC and processes the data for, for example, transmission over a network NW to decompression side system 200 or for storage on a system or carrier SC for playing back the volumetric content, possibly via the network NW in an on-demand service. The volumetric content VC may be dynamic visual volumetric content.

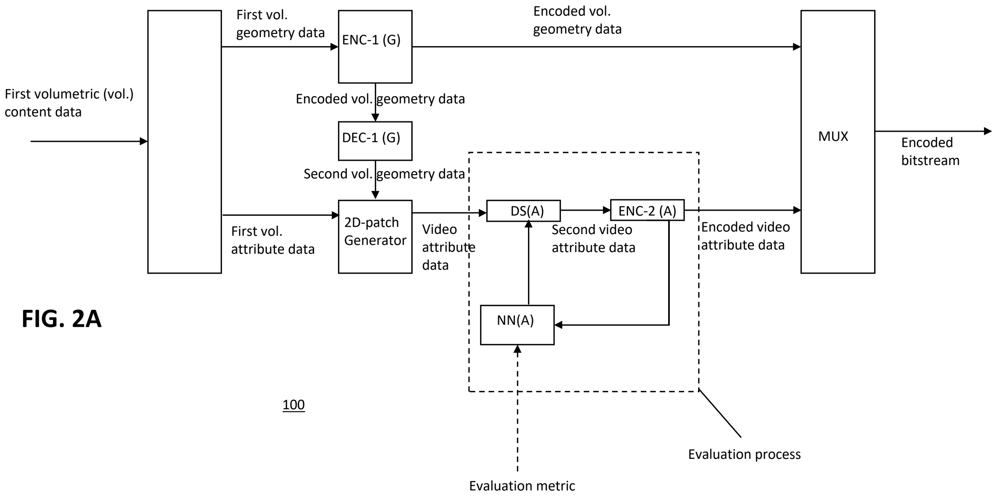

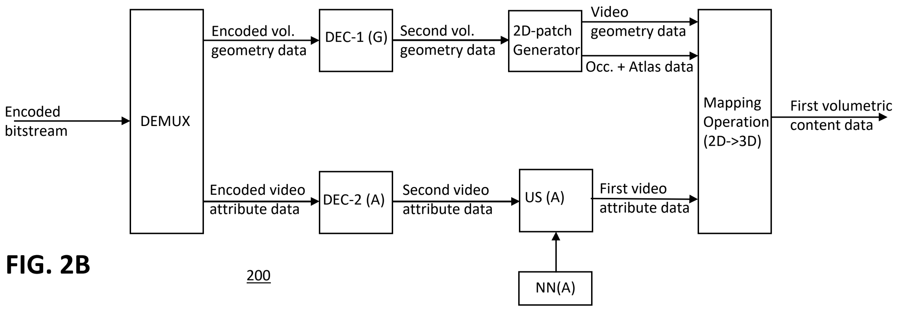

FIGS. 2A and 2B are schematic illustrations of a volumetric content data processing system at the encoding side and decoding side, respectively, comprising downscaling resp. upscaling operation using at least one trained attribute neural network.

FIG. 2A depicts a volumetric content data processing system 100 for processing, including encoding, of first volumetric content data comprising first volumetric, vol., geometry data and first volumetric, vol., attribute data. The processing system comprises a memory and at least one processor, coupled to the memory. The memory may be used to store software code portions for the at least one processor to perform one or more of its tasks. The memory may also be used to store, possibly temporarily, processing results from the processor, such as during an operating cycle.

The first volumetric content data may have been pre-processed. In one embodiment, the pre-processing comprises a voxelization step wherein the 3D object is segmented into a plurality of voxels. Typical voxelizations are Vox10 (geometry values between 0 and 1024), Vox.11 (geometry values between 0 and 2048 and Vox12 (geometry values between 0 and 4096).

The at least one processor may be configured to perform a first encoding process, ENC-1(G), (e.g. a G-PCC encoding process or an Al-PCC encoding process) on the first volumetric geometry data to obtain encoded volumetric, i.e. three-dimensional, geometry data. The at least one processor may further be configured to perform a first decoding process, DEC-1(G), on the encoded volumetric geometry data to obtain second volumetric geometry data. It is noted that the encoding, ENC-1(G), and decoding, DEC-1(G), process for the first volumetric geometry data may involve AI-based encoding and decoding as described, for example, in ISO/IEC JTC 1/SC 29/WG 7, m62679 or ISO/IEC JTC 1/SC 29/WG 7, m70282, as introduced in the summary section of this disclosure.

The at least one processor may further be configured to generate video attribute data comprising at least one video attribute frame, i.e. two-dimensional data frame, with attribute patches from the first volumetric attribute data using the second volumetric geometry data using a 2D patch generator, as shown in FIG. 2A. Such a data frame is known from V-PCC based systems, for example. For this process, traditional two-dimensional video codecs, such as advanced video coding (AVC, also known as H.264) and high efficiency video coding (HEVC, also known as H.265), or VVC, may be used. The at least one processor may further be configured to execute at least one downscaling operation on the video attribute data, DS(A), to generate second video attribute data and to perform a second encoding process, ENC-2(A), on the second video attribute data to generate encoded video attribute data. In one embodiment, the second video attribute data is determined in an evaluation process using at least one trained attribute neural network, NN(A), and, optionally, based on at least one evaluation metric. The at least one processor may further be configured to provide a bitstream comprising at least the encoded volumetric geometry data and the encoded video attribute data. The bitstream may comprise a visual volumetric video-based, V3C, bitstream as known from ISO/IEC/23090:2023-5(E).

The evaluation metric may be based on a comparison of attribute data (in the 2D-domain) and/or a comparison of full point cloud data (in the 3D-domain). Such a metric may comprise, for example, a quality metric, such as peak signal-to-noise ratio, PSNR, a subjective metric, or a rate distortion metric. Rate distortion can be expressed as a cost wherein the loss of video quality and the amount of data required to encode the video are taken into account. A rate distortion optimization optimizes the balance between the amount of data and data quality.

FIG. 2B depicts a volumetric content data processing system 200 for processing, including decoding, of an encoded bitstream comprising encoded volumetric geometry data and encoded video attribute data representing volumetric attribute data. The processing system may comprise a memory and at least one processor, coupled to the memory. The memory may be used to store software code portions for the at least one processor to perform one or more of its tasks. The memory may also be used to store, possibly temporarily, processing results from the processor, such as during an operating cycle.

The at least one processor may be configured to perform a first decoding operation, DEC-1(G), on the encoded volumetric geometry data of the encoded bitstream to obtain second volumetric geometry data. The at least one processor may further be configured to generate video geometry data comprising at least one video geometry frame with geometry patches and occupancy data based on the second volumetric geometry data using a 2D patch generator.

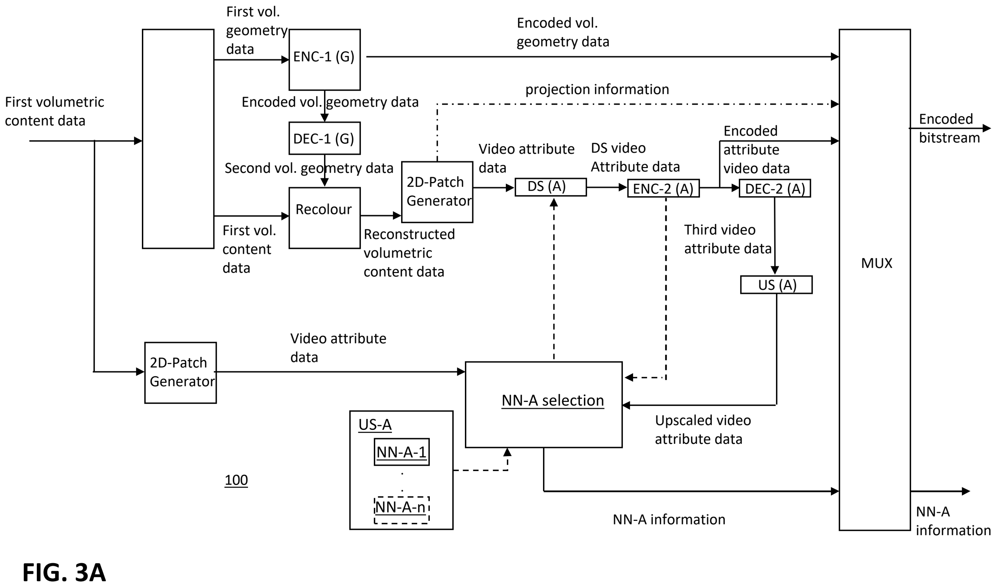

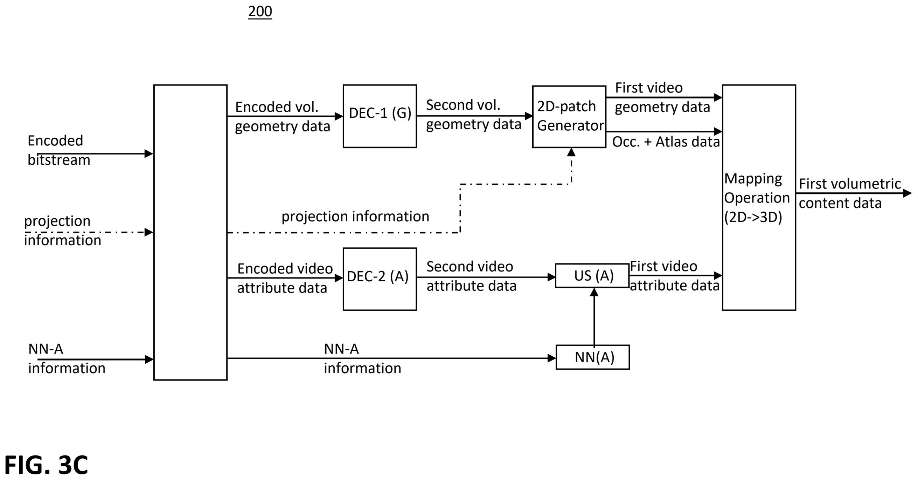

The skilled person will understand that the 2D patch generation at the encoding side system 100 and the 2D patch generation at the decoding side system 200 preferably provide a substantially identical output. A hard-coded configuration for the encoding side system 100 and the decoding side system 200 may be used to that effect. Alternatively, the encoding side system 100 in FIG. 2A may provide projection information to the decoding side system 200, as shown in FIG. 2B. For example, such projection information is obtained from the bitstream of a V3C bitstream as described in the background of this disclosure. This projection information may be generated according to a process conventionally known to the V-PCC codec/coding standard, as can be seen from FIG. 3A and FIG. 3C.

The at least one processor may further be configured to perform a second decoding operation, DEC-2(A), on the encoded video attribute data of the encoded bitstream to obtain second video attribute data comprising at least one video attribute frame with attribute patches. The at least one processor may further be configured to perform an upscaling operation, US(A), on the second video attribute data to obtain first video attribute data using at least one trained attribute neural network NN(A). Since the data is now available in the two-dimensional domain, the at least one processor may further be configured to generate first volumetric content data using a mapping operation on the geometry video data, the first video attribute data and occupancy data to obtain first volumetric content data.

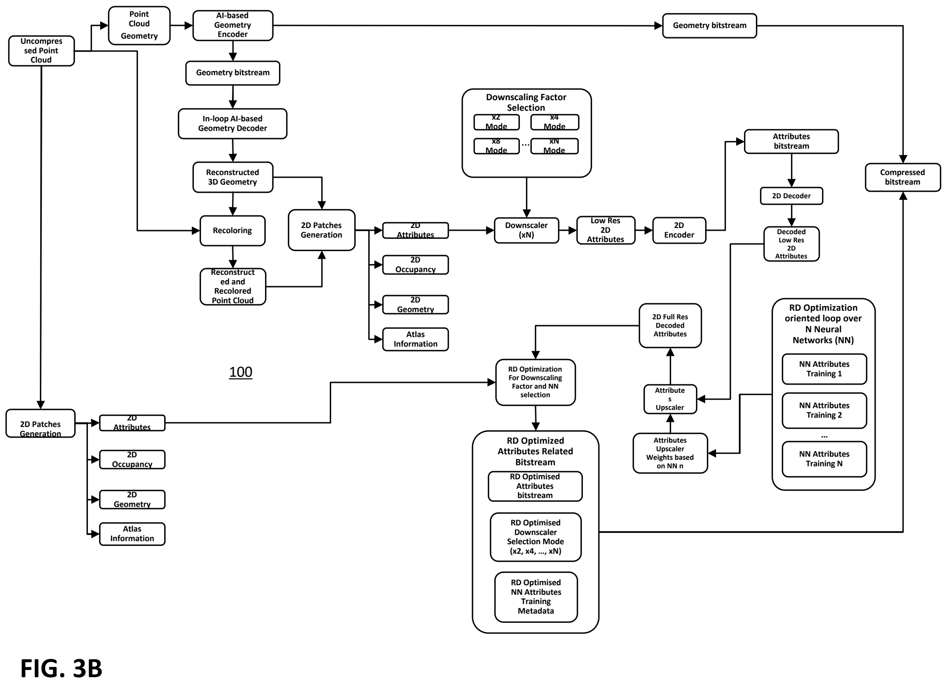

FIGS. 3A and 3B schematically illustrate a second and third embodiment of a volumetric content data processing system for an encoding side system 100.

More particularly, an embodiment for generation of the video attribute data and an embodiment for the evaluation process is schematically illustrated. These embodiments can be applied independently from each other.

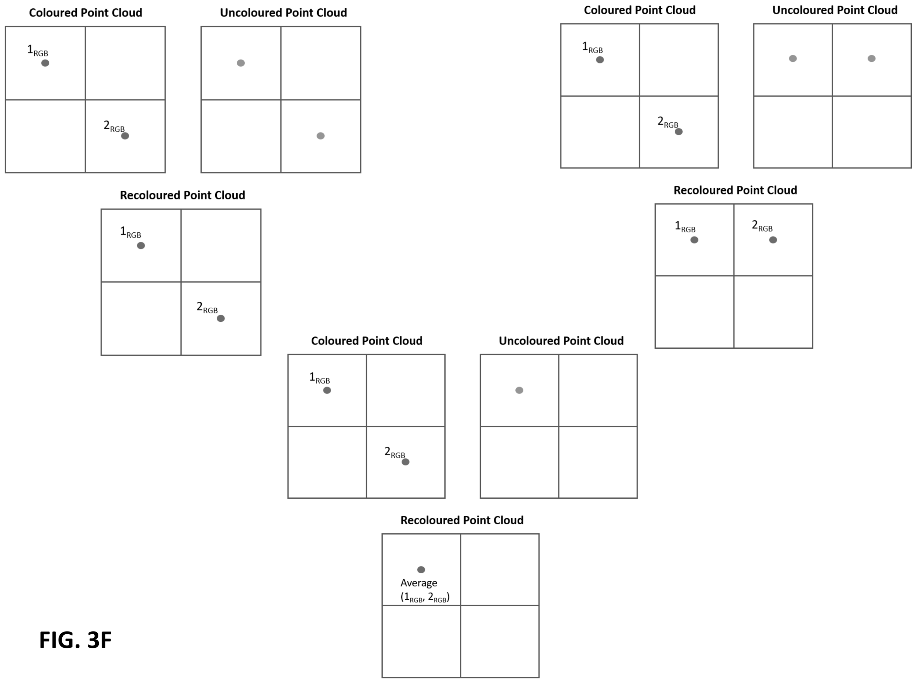

As shown in FIG. 3A, in one embodiment, the at least one processor of the system 100 is configured to generate reconstructed volumetric attribute data from the second volumetric geometry data and the first volumetric content data and generate the video attribute data comprising at least one video frame with attribute patches from the reconstructed volumetric attribute data using the 2D patch generator from FIG. 2A. The embodiment facilitates projection of original attributes (e.g. colours) on the second volumetric geometry data, so that recoloured volumetric content data is obtained. Each voxel of the reconstructed point cloud may now have an assigned attribute (e.g. colour) which makes that a substantially exact matching is obtained. A more detailed description for an embodiment of the recolouring operation is described in ISO/IEC JTC1/SC29/WG11 MPEG2017/M42141 by Suma et al. One embodiment of the recolouring operation is described in further detail with reference to FIG. 3F below.

In one embodiment, the at least one processor of the system is further configured to perform the first encoding process, ENC-1(G), on the first volumetric geometry data to obtain encoded volumetric geometry data using a geometry neural network module, as described for FIG. 2A.

Optionally, as shown by the dashed-dotted line in FIG. 3A, projection information may also be generated from the 2D patch generator and provided to the decoding side system 200 as shown in FIG. 3C. The use of this projection information will be described in further detail with reference to the decoding side system 200 depicted in FIG. 3C. The projection information may be included in the encoded bitstream as an atlas (sub-)bitstream, for example in a V3C implementation. The projection information may be carried in network adaptation layer, NAL, units in the V3C bitstream.

As shown in FIG. 3A, the at least one processor of the system 100 may be configured to execute the evaluation process on the generated video attribute data. The evaluation process may comprise one or more cycles. A cycle may comprise at least one downscaling operation, DS(A), a process of encoding, ENC-2(A), and subsequent decoding, DEC-2(A), and an upscaling operation, US(A). One cycle comprises at least executing at least one downscaling operation on the generated video attribute data to generate downscaled video attribute data. The cycle may further comprise executing a process of encoding and decoding of the downscaled video attribute data to generate third video attribute data and executing an upscaling evaluation process.

The upscaling evaluation process may comprise one or more cycles of upscaling and, optionally, metric determination for the upscaled data. For example, the upscaling evaluation process may comprise one cycle. The upscaling evaluation process may also contain more than one cycle. These one or more cycles may occur within the evaluation process. One cycle may comprise upscaling the third video attribute data using at least one trained attribute neural network to generate upscaled video attribute data and determining at least one evaluation metric for the upscaled video attribute data. Determination of the evaluation metric may be done by comparison with video attribute data derived from the first volumetric content data using a 2D-patch generator as shown in FIG. 3A.

In one embodiment, the at least one processor may further be configured to select a trained attribute neural network, NN-A, based on the determined at least one evaluation metric and to provide attribute neural network information in connection with, for example within, the bitstream.

The at least one processor may further be configured to provide a bitstream comprising encoded video attribute data representing the encoded second video attribute data determined based on the evaluation metric. In this manner, video attribute data associated with volumetric content, such as a point cloud, may be more efficiently encoded than with conventional methods. The downscaled attribute data are encoded at a lower bitrate, whilst selecting a trained attribute neural network, specifically trained for optimized upscaling of video attribute data, that allows for upscaling to the original resolution at an optimized objective quality or subjective quality and/or optimized (lowest) Rate-Distortion cost.

In particular, in one embodiment the at least one processor is further configured to determine the at least one attribute metric as the evaluation metric for the upscaled video attribute data based on a comparison of the upscaled video attribute data with the generated video attribute data comprising the at least one video attribute frame with attribute patches. The embodiment envisages determining the evaluation metric in the, two-dimensional, video domain.

The attribute metric may be based on a comparison of attribute data. Such metric may comprise, for example, a quality metric, such as peak signal-to-noise ratio, PSNR, a subjective metric, and/or a rate distortion metric. A quality metric may be used by determining a quality difference between the upscaled video attribute data and the generated video attribute data. Rate distortion can be expressed as a cost wherein the loss of video quality and the amount of data required to encode the video are taken into account. A rate distortion optimization loop optimizes the balance between amount of data (bits spent to encode) and (video) data quality.

In particular, neural network selection block, NN-A selection, may decide whether processing system 100 may beneficially exploit downscaling DS and, if so, which neural network NN processing system 200 should be applied for upscaling, preferably by comparing attribute metrics such as by comparing a rate distortion metric associated with encoding the downscaled video attribute data and a rate distortion metric associated with encoding the generated video attribute data (e.g. prior to downscaling). To that end, the processing system 100 may provide attribute neural network information, NN-A information, as shown in FIG. 3A. If neural network selection block, NN-A selection, determines that upscaling is not beneficial in view of the obtained metrics, downscaling is not performed and encoded original video frame(s) with attribute patches may be provided.

It should also be noted that the decision to apply the downscaling operation DS(A) for video attribute frames may vary from video frame to video frame within a group of frames, GOF. For example, a GOF may consist of a predetermined number of frames. Within the GOF, different types of video frames may be distinguished, and, as can be determined from one or more evaluation metric, one type of video frame may benefit from downscaling whereas other type(s) within the GOF do not. For example, the GOF may include I-frames carrying most information and predicted frames. The neural network selection block, NN-A selection, may determine, based on the metric or based on the type of frame, that the downscaling operation, DS(A) may be applied to one type of frame within the GOF, such as on the I-frame. **It** should also be appreciated that a strategy may be to skip the downscaling operation for one or more GOFs, as the downscaling operation would not add, or only little, benefit in terms of performance, such as rate distortion performance.

Another approach is to vary downscaling strategies for the video frames with attribute data. The approach may involve determining an evaluation metric, such as an attribute metric, after upscaling US(A) in a first evaluation cycle. Then the downscaling operation may be adjusted, for example by selecting another downscaling algorithm or downscaling factor, or both. Following adjusting of the at least one downscaling operation, shown by the upwardly pointing, dashed, arrow to DS(A) from attribute neural network selection block, NN-A selection, a second evaluation metric, such as an attribute metric, for the video attribute data after upscaling US(A), i.e. the upscaled video attribute data, may be determined in a second evaluation cycle. Again, the attribute metrics may be determined by comparing the video attribute data before input to DS(A) and the video attribute data after upscaling in US(A), respectively as shown in FIG. 3A as inputs to neural network selection block, NN-A selection. More cycles may be performed with different trained neural networks for upscaling. More cycles may also be performed for alternative downscaling operations.

Ultimately, the neural network selection block, NN-A selection, may select a trained attribute neural network based on a comparison between the determined attribute metrics. The selected trained attribute neural network may be signaled to a processing system 200, shown by neural network information NN-A information in FIG. 3A. The selected downscaling operation may also be signaled. The accordingly downscaled and encoded video data may be provided in bitstream using a multiplexer MUX.

The approach enables the processing system 100 to try various downscaling operations and corresponding trained neural networks NN for upscaling to evaluate an adequate combination that can be beneficially exploited.

Another approach pertains to comparing values of determined evaluation metrics with predetermined values for these evaluation metrics. Again, attribute metrics may be determined by comparing the video attribute data before input to DS(A) and the video attribute data after upscaling in US(A), respectively as shown in FIG. 3A as inputs to neural network selection block, NN-A selection. More cycles may be performed with different trained neural networks for upscaling. More cycles may also be performed for alternative downscaling operations. The embodiment enables the processing system 100 to define (minimum) values for the metric(s) that should be obtained if downscaling DS is to be applied, and a corresponding trained attribute neural network is selected. The predetermined value may be variable and, for example, vary between different video frames or types of video frames for attribute patches.

As mentioned above, the processing system may have access to a plurality of trained attribute neural networks. A still further approach includes determining evaluation metrics for two or more of the plurality of trained neural networks and select a trained attribute neural network on that basis. To that end, the attribute neural network selection NN-A may interact with the trained attribute neural network as shown by the dashed upwardly pointing arrows in FIG. 3A.

For example, a process step may involve upscaling video attribute data using at least a first trained attribute neural network and a second trained attribute neural network. The process may further include determining at least one a first evaluation metric when the first trained attribute neural network is used and a second evaluation metric when the second trained attribute neural network is used. The first evaluation metric, for example a first attribute quality metric, may be determined by comparing the video attribute data before input to DS(A) and the video attribute data after upscaling in US(A) using a first trained attribute neural network NN-A-1, for example, respectively as shown in FIG. 3A as inputs to neural network selection block, NN-A selection. The second evaluation metric, such as a second attribute quality metric, may be determined by comparing the video attribute data before input to DS(A) and the video attribute data after upscaling in US(A) using a second trained attribute neural network NN-A-2, for example. More cycles may be performed with different trained neural networks NN-A-n for upscaling.

Ultimately, the neural network selection block, NN-A selection, may select a trained attribute neural network based on a comparison between the determined evaluation metrics. The selected trained attribute neural network may be signaled to a processing system 200, shown by neural network information NN-A information. The downscaling operation may also be signaled. The accordingly downscaled and encoded video data may be provided in the bitstream using a multiplexer MUX.

It should be noted that the above approaches for neural network selection may be run in parallel if this is permitted by the available resources, such as computing power and time.

The metrics for the above approaches may include at least one of an objective quality metric, such as PSNR, a subjective quality metric and a rate distortion metric to select a trained neural network.

A rate distortion metric may be used to balance the number of bits for a video frame required to obtain a certain quality of the video frame and can be applied advantageously since downscaling involves reduction of the number of bits. To that end, the neural network selection block, NN-A selection, may obtain coding efficacy information from the encoder, ENC-2(A), as shown by the dashed downwardly pointing arrow in FIG. 3A. The coding efficacy may be determined for different downscaling operations for a video frame, for example. The coding efficacy can be used to determine a rate distortion metric.

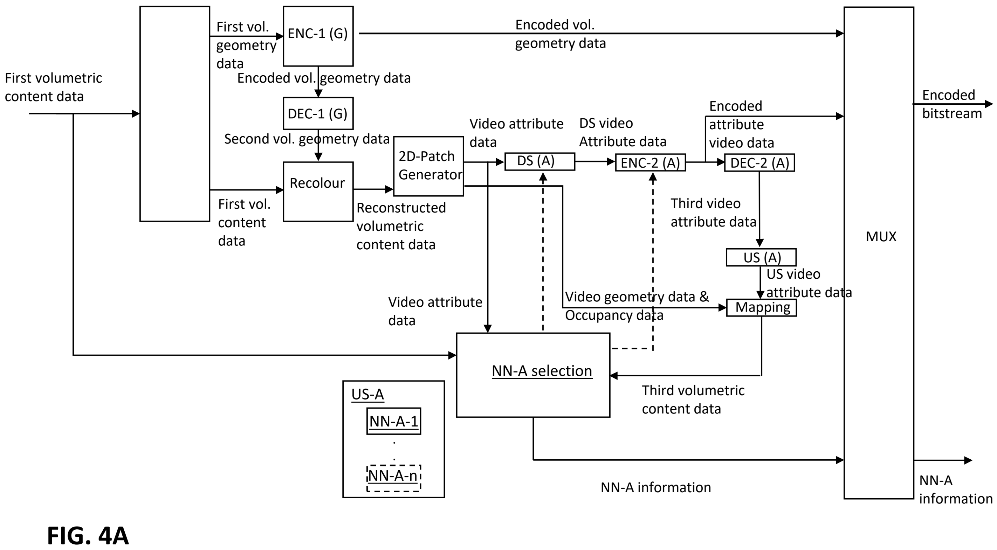

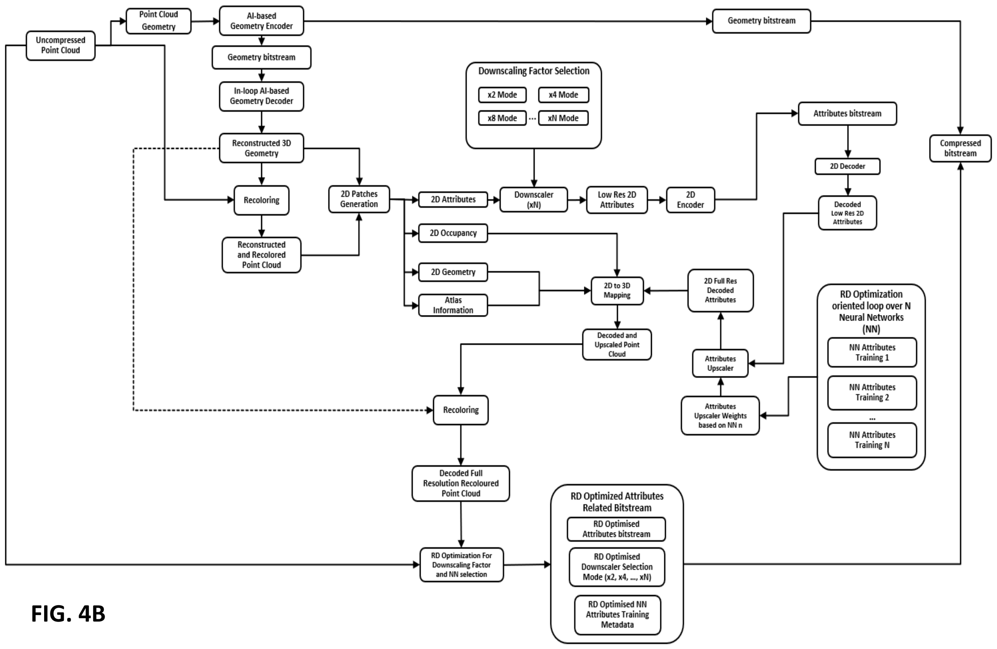

In the above approaches, attribute metrics have been determined by comparing two-dimensional video frames with attribute patches representing an aspect of the volumetric content. It is noted that the metrics may also be determined based on a comparison of the volumetric content as shown as point cloud, PC, inputs to the neural network selection block, NN-A selection, as exemplified in FIGS. 4A and 4B.

If downscaling is applied in processing system 100, the downscaling factor and/or downscaling algorithm, and corresponding upscaling information for processing system 200 may need to be signaled, if not predetermined. The processing system 100 may provide, for example, at least one of a downscaling factor or downscaling algorithm to assist a processing system 200 at a decompression side to derive an upscaling factor or upscaling algorithm for reconstructing the volumetric content.

The upscaling information may comprise an upscaling factor and/or upscaling algorithm to be applied by the processing system at the decompression side. The upscaling information may be implicit and/or may be included in metadata associated with the bitstream.

Fig. 3B is a schematic illustration of another embodiment of an encoding side system 100.

An uncompressed point cloud, i.e. the volumetric content data, represents the raw point cloud given as input to the encoder. The point cloud may have been pre-processed comprising, for example, a voxelization step. The uncompressed point cloud is then divided into point cloud geometry (XYZ coordinates of the point cloud voxels positions) and attributes (e.g. RGB colour values assigned to each XYZ position). Geometry data is provided as input of an Al-based geometry encoder that subsequently outputs a geometry bitstream for transmission. The geometry data is also given to an in-loop Al-based geometry decoder to recreate, at the encoder side, the substantially identical point cloud geometry as the reconstructed point cloud at the decoder side. The output of the in-loop Al-based geometry decoder is the reconstructed 3D geometry.

The reconstructed 3D geometry is one of the two inputs of a recolouring component. The second input of the recolouring component is constituted by the uncompressed point cloud. The recolouring component projects the original colours to the reconstructed 3D geometry generating recoloured point cloud attributes as the output. An embodiment of such a process will be described with reference to FIG. 3F.

The point cloud attributes or reconstructed point cloud and the reconstructed 3D geometry are the two inputs of a 2D-patch generation block configured to create the 2D video frame comprising 2D attributes and, possibly, also 2D geometry, 2D occupancy and/or atlas information. Atlas information, 2D geometry and 2D occupancy may not be compressed and used only for the Rate Distortion Optimization process, as explained below in relation to FIG. 4A. An identical hard-coded configuration may then be used for both the encoding side and decoding side for the patch generation. Alternatively, as explained with reference to FIG. 3A but not depicted in FIG. 3B, the projection information may (also) be provided to the decoding side system 200 in the bitstream.

The 2D attributes are input to a downscaler. The downscaler is configured to apply one of the modes available within the downscaling factor selection block (x2 mode, x4 mode, ..., xN mode). The downscaler provides, as output, low resolution 2D attributes that are given as input to a 2D encoder. The output of the 2D encoder is an attribute bitstream.

In order to perform rate distortion, RD, optimization, the attribute bitstream is provided as input to an in-loop 2D decoder that provides as output decoded low resolution, res, 2D attributes. This output has the same compression distortion that would be obtained at the decoding side.

The decoded low resolution 2D attributes is the first of the two inputs of the attributes upscaler. The second input of the attributes upscaler is represented by the attributes upscaler weights based on NNn, powered by the RD optimization-oriented loop over N neural networks (NN) which performs a loop over the available trained attributes neural networks (neural networks attributes training 1, neural networks attributes training 2, ... neural networks attributes training N). The attributes upscaler then is capable of recovering the full resolution of the attributes obtaining the 2D full resolution decoded attributes. The RD optimization for determining a downscaling factor and NN selection is performed in the 2D domain between the 2D full resolution decoded attributes and the original 2D attributes generated by a 2D patch generation block having the uncompressed point cloud as an input.

The output of the RD optimization for determining downscaling factor and NN selection module is then (i) the RD optimised attributes bitstream that provides the compressed stream related to the downscaled low resolution 2D attributes, (ii) the RD optimised downscaler selection mode (x2, x4, ..., xN) which indicates the downscaling factor selected and provides, to the decoding side, the information needed to recover the original resolution and (iii) the RD optimised NN attributes training metadata to provide to the decoder the information needed to decide which neural network (assuming multiple neural networks are available) to use to perform the upscaling process.

Fig. 3C is a schematic illustration of an embodiment of a decoding side system 200. The decoding system 200 of FIG. 3C adds to the decoding system 200 of FIG. 2B that the at least one processor of the decoding system 200 is further configured to receive attribute neural network information, NN-A information, associated with a selected trained attribute neural network and to execute the upscaling operation on the second video attribute data using the selected attribute neural network in accordance with the received attribute neural network information to generate the first video attribute data.

In one embodiment, in addition to attribute data, geometry data (and, possibly, occupancy data), volumetric content data processing may use an atlas (sub-)bitstream comprising projection information that assists in (re)constructing point clouds. The decoding side system 200 of FIG. 3C may receive the bitstream with projection information as indicated by the dashed-dotted arrow. The projection information may be generated at the encoding side system 100 as shown in FIG. 3A by the dashed-dotted arrow. The projection information may be provided in the encoded bitstream, as shown in FIG. 3A, but may alternatively be transmitted separately, for example out-of-band, OOB. The projection information may assist the 2D-patch generator at the decoding side system 200 of FIG. 3C to generate an output that is substantially identical to the output of the 2D-patch generator in the encoding side system 100 of FIG. 3A, thereby assisting the reconstruction of the first volumetric content data at the decoding side system 200. In particular, the projection information may allow associating all these geometry frames and occupancy frames and enable the inverse reconstruction, from a 2D representation back to a 3D representation.

Furthermore, it may be noted that the at least one processor of the system 200, like for the at least one processor of the system 100, in one embodiment, may be further configured to perform the first decoding operation using a geometry neural network module to obtain the second volumetric geometry data. This embodiment beneficially exploits Al-assisted bitstream size reduction at the encoding side system 100 using neural networks for both the geometry data and attribute data of volumetric content. The geometry neural network module may, for example, use or benefit from the approach disclosed in ISO/IEC JTC 1/SC 29/WG 7, m62679 or ISO/IEC JTC 1/SC 29/WG 7, m70282 introduced previously herein.

A similar geometry neural network module may be used for the encoding side system 100, for example in the AI-based geometry encoder in FIG. 3B. In one embodiment, such a geometry neural network may use feature encoding and octree encoding, for example.

The processing may include execution of a set of downsampling steps on the geometry data. Geometry downsampling is performed in a voxelized geometry so that the geometry resolution is reduced at each downsampling step. For example, if the resolution of the geometry data starts from 12 bits, a first downsampling step would reduce the geometry resolution to 11 bits and the next downsampling step to 10 bits. For each downsampling step, an octree encoder and a feature encoder is used.

The geometry space is voxelized, i.e. the space is divided into uniform blocks forming a grid. Octree is a tree data structure useful in geometry representation. It allows to represent geometry coordinates (normally in Float32 for x, y and z, meaning 32x3 bits) with one bit per voxel. Octree-based coding uses a predicted occupancy probability distribution for arithmetic encoding and decoding of occupancy symbols. Occupancy indicates which voxels are occupied in an octet. Each level is represented by a set of octets, wherein the number of octets depend on the occupied voxel of an upper level. For example, one bit may be for the root and 8 bits are used for the first level. Arithmetic encoding then uses probabilities to represent the more probable solutions with fewer bits and the less probable solution with more bits to obtain a lossless reduction of the overall bitstream. In this manner, octree-based coding encodes which voxels are occupied according to their probability distribution.

Prior to feature encoding, a point-to-feature operation is executed wherein the geometry presented as an octree is used to extract features (i.e. the results of a convolutional operation between 3D geometry coordinates and a convolutional neural network CNN) providing a latent feature space. In more detail, the voxel occupancy is considered and represented as a sparse 3D tensor to store the information efficiently. Next, features are extracted from the current level, wherein from the sparse 3D tensor through convolution, the occupied voxels are all represented while the space to represent the empty areas is minimized. The operation also uses past levels for more context, wherein again convolution is used to extract useful features. The system may, for example, keep track of the last four levels, including 3D location, octant and level. The information may be stored in a context table, which is then processed to extract new, useful, features.

Then, in the feature encoding step, the system receives features from a current level and from previous levels at a conditional encoder. The conditional encoder removes unnecessary information from the previous levels to keep only new information as residual features. The system may then look for previously processed features to predict statistical properties of a current feature. For example, the variance of a Gaussian distribution may be estimated. Such hyperprior synthesis may assist in compressing data more efficiently. The predicted statistics may then be used to compress the residual features into a bitstream, here a geometry bitstream. The feature may be reconstructed and quantized for enhanced compression. The feature or reconstructed feature may then be used for encoding the next level of the 3D structure.

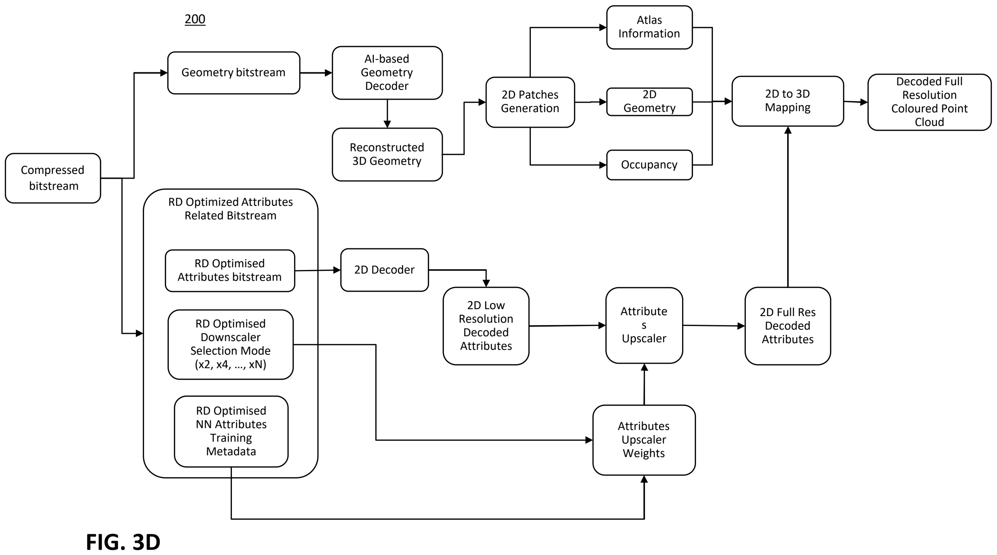

Fig. 3D is a schematic illustration of another embodiment of a decoding side system 200.

A compressed bitstream from encoding side system 100 described in relation to FIG. 3B is the input of the decoder side system 200. The bitstream is divided into a geometry bitstream and a rate distortion, RD, optimized attributes related bitstream. This RD optimized attributes related bitstream is divided into (i) the RD optimised attributes bitstream that provides the compressed stream related to the downscaled low resolution 2D attributes, (ii) the RD optimised downscaler selection mode (x2, x4, ..., xN) which indicates the downscaling factor selected and provides the information to recover the original resolution and (iii) the RD optimised NN attributes training metadata to provide the information on which neural network, NN, performs the upscaling process (if more than one NN is available). Although not shown in FIG. 3D, projection information may also be received by the decoding side system as described with reference to the decoding side system 200 in FIG. 3C.

The geometry bitstream is the input to the Al-based geometry decoder. The Al-based geometry decoder decodes the geometry bitstream creating the reconstructed 3D geometry.

In parallel the rate distortion optimized attributes related bitstream is processed in the following way. The RD optimized attributes bitstream, being in the 2D domain, is given as input to the 2D decoder. The output of the 2D decoder is the 2D low resolution decoded attributes that becomes one of the two inputs of the attributes upscaler. The RD optimised downscaler selection mode (x2, x4, ..., xN) and the RD optimised NN attributes training metadata are the two inputs of the attributes upscaler weights. This component represents the second input the attributes upscaler. The attributes upscaler processes the 2D low resolution decoded attributes using the attributes upscaler weights and provides, as output, the 2D full resolution decoded attributes.

In order to generate a decoded full point cloud, further processing may be necessary in order to use the reconstructed 3D geometry, in the 3D domain, and the 2D full resolution decoded attributes, in the 2D domain.

One form of such processing entails input of the reconstructed 3D geometry to a 2D patch generation block identical to the one described for the encoding side system 100 in FIG. 3B. The 2D patch generation block generates 2D geometry, 2D occupancy and atlas information. The 2D attributes are missing because at this stage the geometry is uncoloured. Default attribute data may be used at this stage as defined in the claims.

In one embodiment, the at least one processor is further configured to further generate video attribute data with default attribute patches (not shown in FIG. 3D), in addition to the video geometry data and the occupancy data, based on default volumetric attribute data. The video attribute data with the default attribute patches may subsequently be substituted, i.e. replaced, by the first video attribute data before performing the mapping operation. In one embodiment, the system 200 adds default attribute patches as described by Zaghetto et al published ISO/IEC JTC 1/SC 29/WG 7, m62679, in 2023. The use of the default attribute data assists in generating video frames with patches using a conventional patch generator. The output video attribute data with default attribute patches may then be substituted with the actual video attribute frame contained in the bitstream to generate the volumetric content data.

In one other embodiment, the at least one processor is further configured to add the first video attribute data from the upscaling operation to the video geometry data and the occupancy data before performing the mapping operation. This embodiment avoids the use of default attribute data. If needed, the patch generator for generation of at least video geometry data with geometry patches, occupancy data and atlas information based on the second volumetric geometry data may not require input of attribute data. Optionally, the patch generator may be provided an attribute data absence notification notifying the generation process on the absence of attribute data or with an attribute data removal operation removing attribute data before performing the mapping operation.

The 2D geometry, 2D occupancy, plus the atlas information are three of the four inputs for a 2D to 3D mapping component. The 2D full resolution decoded attributes represent the other input needed by the 2D to 3D mapping component. The 2D to 3D mapping, receiving the information corresponding to 2D geometry, 2D occupancy and the atlas information, plus the 2D full resolution decoded attributes, is capable of recreating the geometry in the 3D domain with the corresponding decoded colours assigned to each voxel of the point cloud, generating the decoded full resolution coloured point cloud.

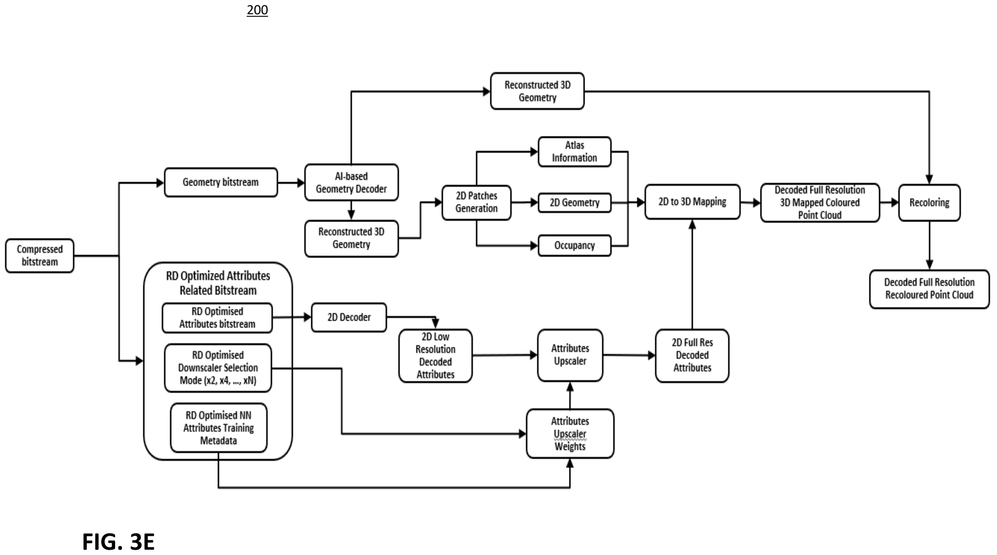

FIG. 3E is a schematic illustration of a further embodiment of a decoding side system 200. The embodiment of FIG. 3E may assist to compensate for geometry drift occurring as a result from the 2D -patch generation for the 2D geometry data. In comparison to the embodiment of FIG. 3D, the embodiment of FIG. 3E feeds the reconstructed 3D geometry data not only to the 2D patches generator but also to a recolouring operation. The recolouring operation also obtains the decoded full resolution point cloud obtained using VSS-PCC and applies the reconstructed 3D geometry to ensure that the final point cloud is substantially identical to the AI-PCC compressed point cloud.

FIG. 3F provides a simplified illustration of a recolouring operation as applied in both the encoder side system 100 and the decoder side system 200 as described above for the embodiments of FIGS. 3A-3E and as also shown in the embodiments of FIGS. 4A-4B. The recolouring operation facilitates projection of original attributes (e.g. colours) on volumetric geometry data, so that recoloured volumetric content data is obtained. The operation is a simplified version of the more generic operation described in ISO/IEC JTC1/SC29/WG11 MPEG2017/M42141 by Suma et al in combination with ISO/IEC JTC1/SC29/WG11 MPEG2017/ M41665 by Nakagami et al

The recolouring module in the encoding side system 100 and/or decoding side system 200 obtains as an input a (voxelized) point cloud with colours (attributes) and a point cloud without colours (attributes). These may therefore be referred to as a coloured point cloud resp. an uncoloured point cloud. The output of the recolouring module may be referred to as the recoloured point cloud. In particular, for the encoding side system 100 in FIG. 3A, the first volumetric content data comprises the coloured point cloud and the second volumetric geometry data comprises the uncoloured point cloud data. The reconstructed volumetric attribute data comprises the recoloured point cloud. Likewise, in FIG. 3B, the uncompressed point cloud, e.g. the raw point cloud possibly having been voxelized already, comprises the coloured point cloud and the reconstructed 3D geometry comprises the uncoloured point cloud. The reconstructed and recoloured point cloud is the reconstructed point cloud. The same applies to the embodiments of the encoding side system 100 shown in FIG. 4A and 4B, respectively.

In particular, for the decoding side system 200 in FIG. 3E, the decoded full resolution 3D mapped coloured point cloud comprises the coloured point cloud and the reconstructed 3D geometry comprises the uncoloured point cloud. The recoloured point cloud comprises the decoded full resolution recoloured point cloud in FIG. 3E.

In the upper left, upper right and bottom illustration in FIG. 3F, four voxels of a voxelized coloured point cloud are shown, wherein the upper left and bottom right voxel are occupied. Processing of the geometry data as described herein may provide any of the uncoloured point clouds shown in FIG. 3F. This processing comprises, for example, the encoding ENC-1(G) and decoding DEC-1(G) of the geometry data in FIG. 3A and 4A for the encoding side system 100 and the AI-based geometry decoding of the geometry bitstream in FIG. 3E. In FIG. 3F, the processing may result in that the same voxels be occupied as shown in the upper left and upper right illustrations of FIG. 3F for the coloured point cloud and uncoloured point cloud. In this case, the identical colours apply for the uncoloured point cloud in the recolouring operation. However, the occupied voxels need not to correspond, as shown in the bottom illustration of FIG. 3F. In that case, the final colour is created in the recolouring process by averaging the colours of the coloured point cloud using weights obtained from determining nearest distances. Notably, the number of neighbours can be parametrised, for example to 2, but 1 or higher values are also allowed.

FIGS. 4A and 4B schematically illustrate a fourth and fifth embodiment of a volumetric content data processing system for an encoding side system 100.

The embodiment of FIG. 4A provides for a system performing neural network selection by an evaluation process in the 3D-domain. It should be appreciated that this embodiment may be combined with the embodiment of FIG. 3A enabling attribute neural network selection in the 2D-domain.

In particular, in the embodiment of FIG. 4A, third volumetric content data is obtained by first generating video geometry data comprising at least on video geometry frame with geometry patches and occupancy data from the second volumetric geometry data. Subsequently, a mapping operation may be performed on the upscaled video attribute data, the video geometry data and the occupancy data to generate the third volumetric content data. As part of the mapping process, the 2D geometry and attribute data are converted into a 3D point cloud (third volumetric content data) .The at least one processor of the encoding system 100 is further configured to determine the at least one evaluation metric associated with the upscaled video attribute data, based on a comparison of third volumetric content data with the first volumetric content data.

The at least one evaluation metric may comprise, for example, a quality metric, such as peak signal-to-noise ratio, PSNR, a subjective metric, and/or a rate distortion metric. A quality metric may be used by determining a quality difference between the third volumetric content data and the first volumetric content data. Rate distortion can be expressed as a cost wherein the loss of video quality and the amount of data required to encode the video are taken into account. A rate distortion optimization optimizes the balance between amount of data and data quality. A rate distortion metric may for example be determined based on the quality difference above and the coding efficiency (bits spent) of encoding the video attribute data prior to upscaling (i.e. the DS video attribute data shown in figs 3A and 4A).

Multiple rate distortion metrics may be determined for different encoding cycles testing combinations of different downscaling factors and attribute neural networks. Eventually the coding cycle associated with the best (lowest) rate distortion metric may be selected for encoding the attribute data.

One of the rate distortion metrics may be based on encoding video attribute data without downscaling (which amounts to convention encoding).

FIG. 4B is another embodiment of an encoding side system 100.

An uncompressed point cloud, i.e. the volumetric content data, represents the raw point cloud given as input to the encoder. The uncompressed point cloud is then divided into point cloud geometry (XYZ coordinates of the point cloud voxels positions) and attributes (e.g. RGB colour values assigned to each XYZ position). Geometry data is provided as input of an Al-based geometry encoder that subsequently outputs a geometry bitstream for transmission. The geometry data is also given to an in-loop Al-based geometry decoder to recreate, at the encoder side, the substantially identical point cloud geometry as the reconstructed point cloud at the decoder side. The output of the in-loop Al-based geometry decoder is the reconstructed 3D geometry.

The reconstructed 3D geometry is one of the two inputs of a recolouring component. The second input of the recolouring component is constituted by the uncompressed point cloud. The recolouring component projects the original colours to the reconstructed 3D geometry generating recoloured point cloud attributes as the output.

The point cloud attributes and the reconstructed 3D geometry are the two inputs of a 2D-patch generation block configured to create the 2D images corresponding to 2D attributes and, possibly, also 2D geometry, 2D occupancy and/or atlas information. Atlas information, 2D geometry and 2D occupancy may not be compressed and used only for the Rate Distortion Optimization process, as explained below.

The 2D attributes are input to a downscaler. The downscaler is configured to apply one of the modes available within the downscaling factor selection block (x2 mode, x4 mode, ..., xN mode). The downscaler provides, as output, low resolution 2D attributes that are given as input to a 2D encoder. The output of the 2D encoder is an attribute bitstream.

In order to perform rate distortion, RD, optimization, the attribute bitstream is provided as input to an in-loop 2D decoder that provides as output decoded low resolution 2D attributes. This output has the same compression distortion that would be obtained at the decoding side.

As a next step, for RD optimization is performed in the 3D domain, the attributes are brought back to the 3D domain and, to do so, the attribute data are given as one of the four inputs of the 2D-to-3D mapping component as shown in FIG. 4B. The other three inputs are represented by atlas information, 2D geometry and 2D occupancy from 2D patch generation block as shown in FIG. 4B. The 2D to 3D mapping component is then able to provide, as output, the decoded and upscaled point cloud with the original resolution. Such decoded and upscaled point cloud is then the first of two inputs for the RD optimization for downscaling factor and NN-selection. The RD optimization for downscaling factor and NN selection takes as inputs (i) the decoded and upscaled point cloud to assess the currently chosen downscaling factor and NN attributes training and (ii) the original uncompressed point cloud as reference to calculate the distortion.

The output of the RD optimization for determining downscaling factor and NN selection module is then (i) the RD optimised attributes bitstream that provides the compressed stream related to the downscaled low resolution 2D attributes, (ii) the RD optimised downscaler selection mode (x2, x4, ..., xN) which indicates the downscaling factor selected and provides, to the decoding side, the information needed to recover the original resolution and (iii) the RD optimised NN attributes training metadata to provide to the decoder the information needed on the which neural network (assuming multiple neural networks are available) to use to perform the upscaling process.

In the embodiments of FIGS. 3A-3F and FIGS. 4A-4B, the bitstream is for example an HEVC or VVC based bitstream, the attribute neural network information may be provided as a SEI (Supplemental Enhancement Information) message. The SEI message format is commonly used in HEVC or VVC codecs to convey signalling information. In the alternative, the SEI message may be conveyed in the bitstream as VUI data (VUI configuration parameters) in the bitstream received by a decoding side system as disclosed herein.

It should also be noted that each of the embodiments of FIGS. 3A-3F and FIGS. 4A-4B may benefit from using association information and/or timing information. These embodiments allow for a decoding side system 200, wherein the decoding of the encoded volumetric geometry data and the encoded video attribute data, and the subsequent reconstruction of the point cloud data is less tightly integrated. The bitstream received on the decoding side system 200 may comprise two different sub-streams, each input to a distinct decoder instance, for example DEC-1(G) and DEC-2(A). In an implementation, the bitstream comprises timing information, such that the output of the decoder instances is tightly time-locked, allowing for the recolouring and other reconstruction process steps to be performed in a synchronized fashion as well. When the bitstream lacks the timing information or the sub-streams are received separate from each other at different decoder instances, the signalling information as mentioned above, facilitates the point cloud reconstruction process.

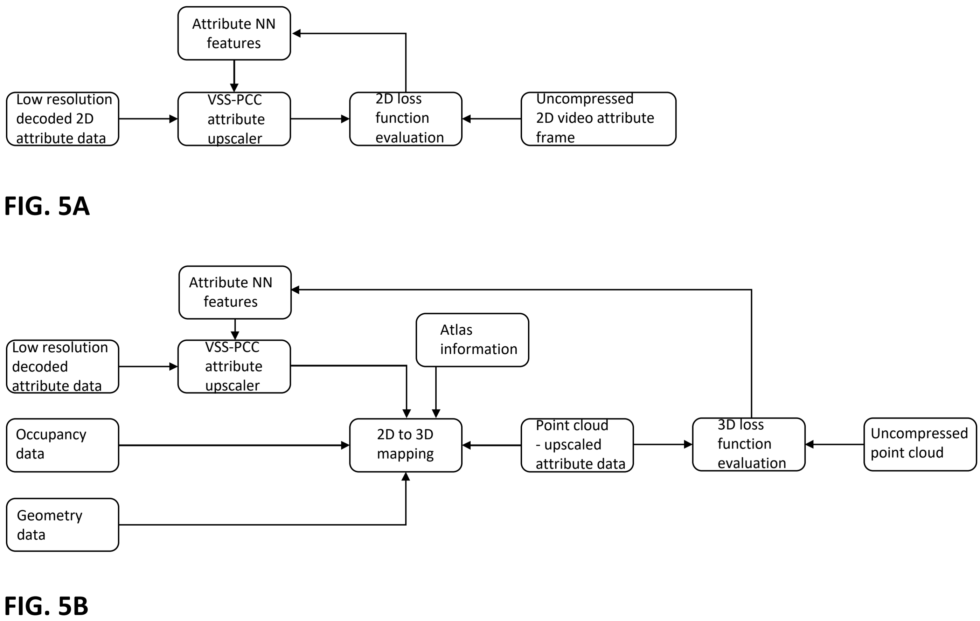

FIGS. 5A and 5B illustrate embodiments for training of the attribute neural networks for upscaling operation in the encoding side systems and decoding side systems as disclosed herein.

The embodiment of FIG. 5A applies a two-dimensional, 2D loss function, for training attribute neural networks with video frames prior to using the attribute neural networks in an encoding side system 100.

As shown in FIG. 5A, decoded video frames with attribute data are obtained in low resolution as a result from a particular downscaling operation and subsequently upscaled using a trained neural network (indicated as VSS-PCC attribute upscaler in FIG. 5A). A rate distortion metric may then be determined by comparing the low resolution video frames and the uncompressed corresponding video frame in a 2D loss function evaluation, in which the bit rate reduction for obtaining the low resolution may also be taken into account. Rate distortion optimization is used to select both the downscaling factor and the upscaling attribute neural network NN.

The 2D quality metric loss function can be determined based on a pixel-by-pixel comparison for videoframes with attribute a using the differences, DIFF, or mean square error, MSE, such as $L 2 D \left(DIFF\right) = α ⋅ DIFF 2 D _ a$ or $L 2 D \left(MSE\right) = α ⋅ MSE 2 D _ a$ with optimization parameters a.

The 2D rate distortion, RD, loss function can be determined based on a pixel-by-pixel comparison for videoframes with attribute a g using the differences, DIFF, or mean square error, MSE, and bit rate B, such as ${L}_{2 D} \left(RD, DIFF\right) = α \left({B}_{a}+λ⋅{DIFF}_{2 D a}\right)$ or ${L}_{2 D} \left(RD, MSE\right) = α \left({B}_{a}+λ⋅{MSE}_{2 D a}\right)$

FIG. 5B is an embodiment for attribute neural network training to obtain one or more trained neural networks for the video content data processing system as disclosed herein. The embodiment applies a three-dimensional, 3D loss function, for training attribute neural networks with video frames prior to using the neural network for selection in an encoding side system 100.

As shown in FIG. 5B, decoded video frames with attribute data are obtained in low resolution as a result from a particular downscaling operation and are subsequently upscaled using a trained neural network (indicated as VSS-PCC attribute upscaler in FIG. 5B). The occupancy data video frames and geometry video frames are not downscaled and upscaled. A rate distortion metric may then be determined applying the 2D to 3D mapping operation, also using video frame with occupancy data and geometry data and the atlas information to obtain the upscaled point cloud. Rate distortion optimization is used to select both the downscaling factor and the upscaling neural network NN.

The 3D quality metric loss function can be determined based on a voxel-by-voxel comparison of the point clouds with attribute a using the differences, DIFF, or mean square error, MSE, such as ${L}_{3 D} \left(DIFF\right) = α ⋅ {DIFF}_{3 D a}$ or ${L}_{3 D} \left(MSE\right) = α ⋅ {MSE}_{3 D a}$ with optimization parameters a.

The 3D rate distortion, RD, loss function can be determined based on a voxel-by-voxel comparison of the point clouds with attribute a and geometry g using the differences, DIFF, or mean square error, MSE, and bit rate B, such as ${L}_{3 D} \left(RD, DIFF\right) = α \left({B}_{a}+λ⋅{DIFF}_{3 D a}\right)$ or ${L}_{3 D} \left(RD, MSE\right) = α \left({B}_{a}+λ⋅{MSE}_{3 D a}\right)$

**It** should be noted that the 2D loss function and 3D loss function operations may be combined.

Hence, as explained above with references to the embodiments in this disclosure, a hybrid solution that combines a video based attribute coder with a volumetric geometry coder the patch projection related variables need to be consistent at the encoder and decoder. Hence, the 2D patch generation at the encoding side system and the 2D patch generation at the decoding side system 200 should. provide a substantially identical output. A hard-coded configuration for the encoding side system 100 and the decoding side system 200 may be used to that effect. However hardcoding does not provide any flexibility or customization. Therefore, the encoding side system 100 in FIG. 2A may provide projection information to the decoding side system 200, as shown in FIG. 2B to address this problem.

For the hybrid codec only the V3C_AVD payload is required. Hence, in some embodiments, projection information may be inserted the bitstream. For example, in an embodiment, the V3C_AD -> NAL_ASPS payload may be provided with additional metadata fields for signalling the configuration that is just for the 3D to 2D projection.

The projection information may include one or more projection parameters that are sent in the bitstream to the decoder so that the decoder can be configured based on the projection information.

Below the projection information and the projection parameters are described in more detail.

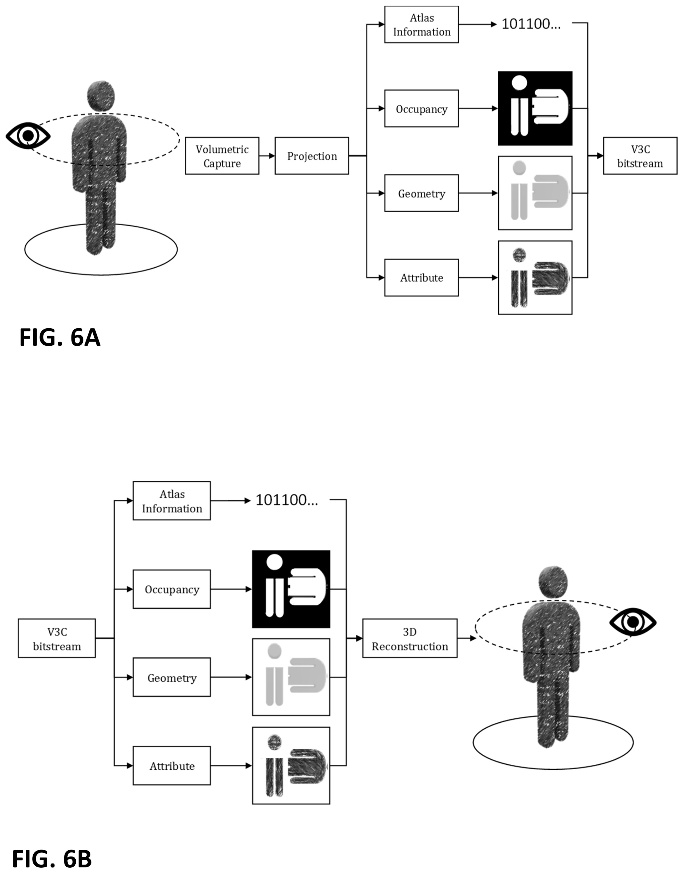

Fig. 6A and 6B provide a high level description of the process of the 3D / 2D conversion at the encoder and decoder side. As shown in Fig. 6A volumetric data is processed into a V3C bitstream wherein the point cloud is projected on to 2D patches including attributes, geometry, occupancy and atlas information. At the decoder side the invers process is executed wherein the attributes, geometry, occupancy and atlas information is used to reconstruct a point cloud.

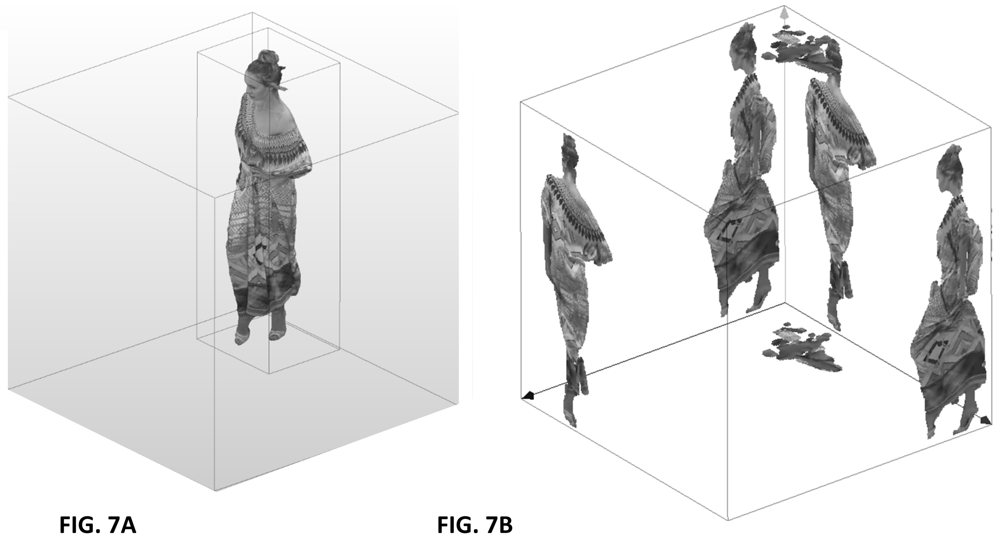

Each point cloud frame represents a dataset of points within a 3D volumetric space that has unique coordinates and attributes. An example of a point cloud frame comprising point cloud data representing a 3D object in a coordinate system of the point cloud as shown in Fig. 7A. The 3D object may be positioned in a 3D bounding box.

For video based point cloud compression the input point cloud frame is processed in the following manner during the encoding process. First, the volumetric 3D data must be represented as a set of 3D projections in different components. Fig. 7B provides an example of the projections of the point cloud data onto different 2D planes defined by different axis of the coordinate system of the point cloud. At the separation stage, the image is decomposed into far and near components for geometry and corresponding attributes components.

In addition, an occupancy map 2D image is created to indicate parts of an image that should be used. A 2D projection may be composed of independent patches based on geometry characteristics of the input point cloud frame. Patches are small rectangular regions on the 2D image that contain projected point cloud data.

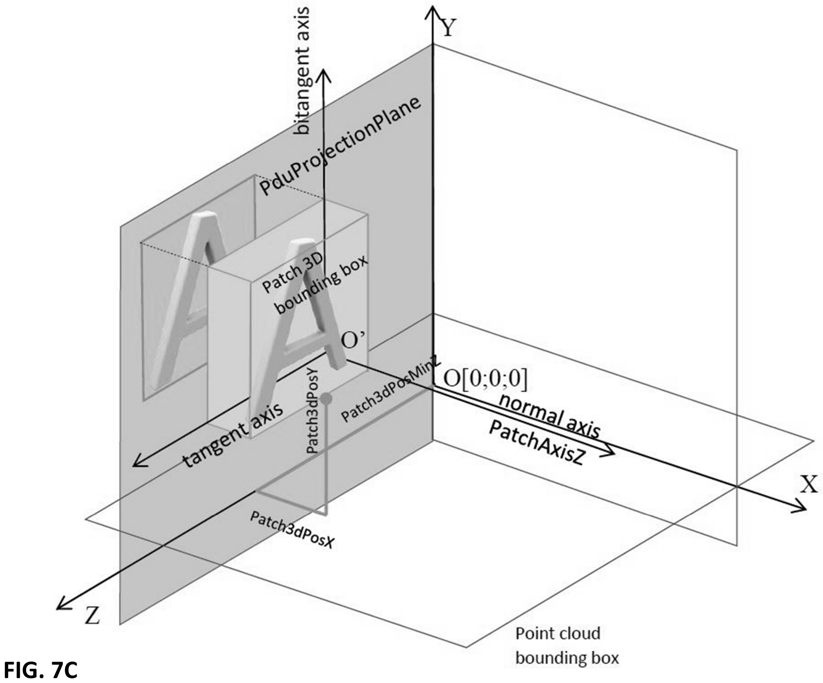

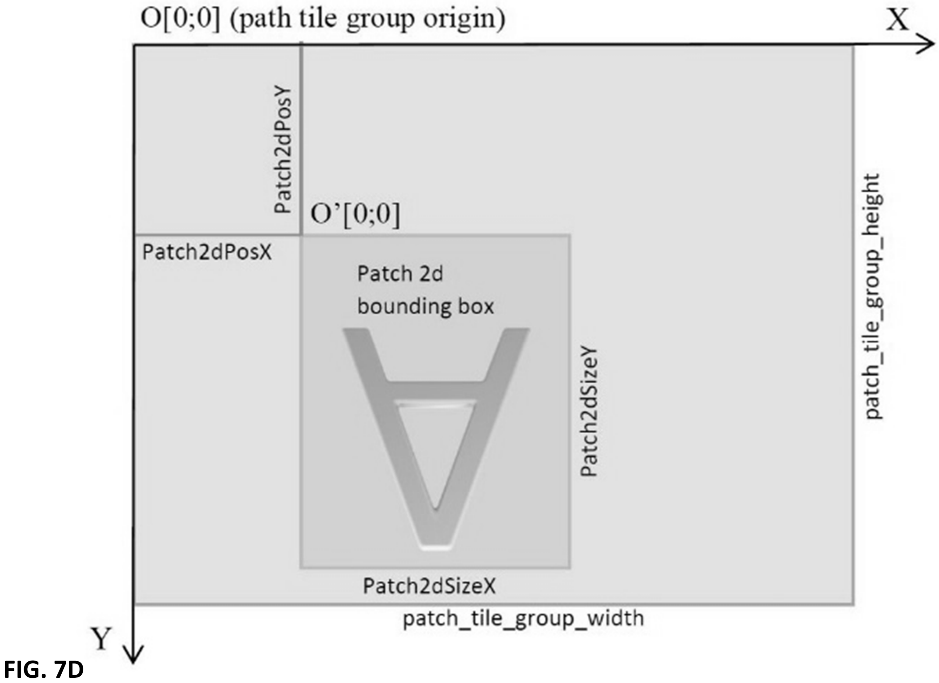

Fig. 7C and 7D illustrate the process of projecting point cloud data representing an object (in this example a 3D letter) onto a projection plane defined by the Y and Z axis of the coordinate system in which the point cloud is defined. As shown in Fig. 7C a point cloud is contained in a point cloud bounding box. The object is contained in a patch 3D bounding box, which may have a certain position in the 3D space of the coordinate system. The point cloud data defining the object may be projected on the 2D projection plane defined by the X and Y axis. The projection is illustrated in Fig. 7D which includes the 2D projection of the point cloud data onto the XY plane wherein the projection may be contained in a patch 2D bounding box of a certain size and at a certain position in the XY plane. The XY projection comprising the patch 2D bounding box may define a tile of a plurality of tiles, wherein each tile may define a different 2D projection of the point cloud data. These tiles may be organized in a rectangular area of a picture, e.g. a pixelized video frame.

After the patches have been generated and 2D frames for video encoding were created the occupancy map, geometry information, attribute information and the auxiliary information may be compressed. At the end of the process, the separate bit streams are multiplexed into the output compressed binary file.

The decoding process starts form demultiplexing of the input compressed the binary file into geometry, attribute, occupancy map and auxiliary information streams. The auxiliary information stream is entropy coded. Occupancy map is compressed using video compression, and has to be upscaled to the nominal resolution. The nearest neighbour method is applied for upscaling. Geometry stream is decoded and in combination with occupancy map and auxiliary information, smoothing may applied to reconstruct point cloud geometry information.

Based on the decoded attribute video stream and reconstructed information for smoothed geometry if present, occupancy map and auxiliary information the attributes of the point cloud can be reconstructed. After attribute reconstruction stage additional attribute smoothing method is used for point cloud refinement.

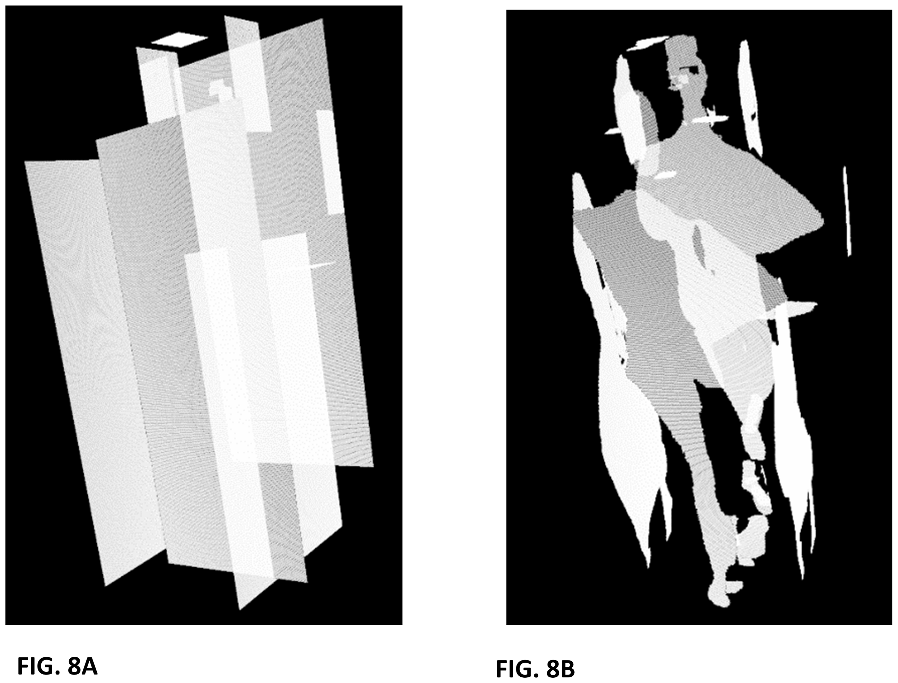

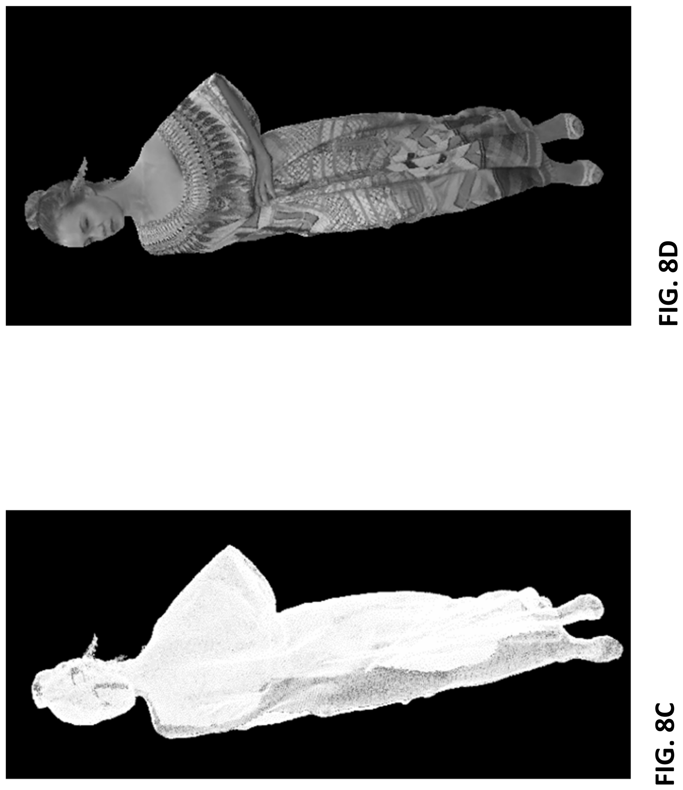

Fig. 8A-8D depict an example of a point cloud reconstruction process based on 2D patches and associated metadata, i.e. atlas, 2D geometry and occupancy, which is needed to reconstruct the point cloud based on the 2D patches. Fig. 8A depicts atlas data, Fig. 8B depicts atlas data combined with an occupancy map, Fig. 8C depicts atlas data combined with an occupancy map and geometry and finally Fig. 8D depicts the combination of the atlas, occupancy map, geometry and attribute information to obtain a reconstructed point cloud representation of the object.

The reconstruction process for pipeline elements is described below starting form the atlas information and adding the occupancy map, the geometry and the attributes information to the reconstruction process.

Below parameters associated with the patch generation process are described in more details. These parameters can be part of the projection information that is used to

### Patch description

The patch in the V-PCC notation is a collection of information that represents a 3D bounding box of the point cloud and associated geometry and attribute description along with the atlas information that is required to reconstruct the 3d point positions and their corresponding attributes from the 2d projections. The graphic representation of the patch is provided below:

Patch axis orientation (tangent, bitangent, normal axis) depends on the projection plane index (PduProjectionPlane), and patch projection mode. It should be noted that any side of the bounding box and additional 45 degree diagonal projections may be a projection plane. The origin of the patch bounding box is the nearest vertex to the point cloud coordinates origin point. The projection image is divided into tile groups. The origin point of the patch projection is the nearest point to the patch tile group origin point.

### Point to voxel conversion, normal estimation and initial segmentation

The patch generation process decomposes the point cloud frame by converting 3d samples to 2d samples on a given projection plane using a strategy that provides the best compression performance. The patch generation process aims at decomposing the point cloud into a minimum number of patches with smooth boundaries, while also minimizing reconstruction error.

At the initial stage, a surface normal is estimated at each point to infer the orientation of the surface each point belongs to. The tangent plane and it's corresponding normal are defined per each point, based on the point's nearest neighbours m within a predefined sear A K-D tree is used to separate the data and find neighbours in the vicinity of a pc barycenter *c* = *p̅* of that set of points is used to define the normal. The barycenter c as follows: $c = \overline{p} = \frac{1}{m} {\sum }_{i = 1}^{m} {p}_{i}$

The normal is estimated from eigen decomposition for the defined point cloud as: ${\sum }_{i = 1}^{m} \left({p}_{i}-\overline{p}\right) {\left({p}_{i}-\overline{p}\right)}^{T}$

Based on this information each point is associated with a corresponding plane of a point cloud bounding box. Each plane is defined by a corresponding normal ***n̅**_{pidx}* with values: (1.0, 0.0, 0.0), (0.0, 1.0, 0.0), (0.0, 0.0, 1.0), (-1.0, 0.0, 0.0), (0.0, -1.0, 0.0), (0.0, 0.0, - 1.0).

More precisely, each point is associated with the plane that has the closest normal (i.e., maximizes the dot product of the point normal ***n̅**ₚᵢ* and the plane normal ***n̅**_{pidx}*). ${max}_{{p}_{idx}} \left\{{\vec{n}}_{{p}_{i}}⋅{\vec{n}}_{{p}_{idx}}\right\}$

The sign of the normal is defined depending on the point's position in relation to the "center". The projection estimation description is demonstrated in **Error! Reference source not found..**

The initial clustering is then refined by iteratively updating the clustered index associated with each point based on the point's normal and the cluster indices of the point's nearest neighbours.

At the following step the points are clustered based on the closeness of the points normal and the distance between points in Euclidian space. Final Patches are created from the clusters by grouping similar clusters. By adding the weight to each plane, the patches are refined when the Initial Segmentation process decides the projection plane, in order to increase the size of the patch in the front or back. The weight values are calculated in the first frame per GOF. It is determined according to the ratio of projected points when projecting all points to the three planes (XY,YZ, ZX).

### Refine Segmentation

The refine segmentation process provides a minimum number patches for a given number of points in the point cloud frame. These patches are called connected components (CC).

The process of segmentation refinement may be simplified by adding a grid based constraint to the neighbouring points search that would allow complexity and memory bandwith reduction. And is implemented in a following way.
1. Partition the (x,y,z) geometry coordinate space into voxels. For example, for a 10-bit point cloud using a voxel size of 8, the number of voxels along each coordinate would be 1024 / 8 = 128 and so the total number of voxels in the coordinate space would be 128 × 128 × 128.
2. Find *filledVoxels,* the filled voxels in the grid which are voxels having at least one point inside.
3. Calculate a *voxScoreSmooth* score for each filled voxel related to each projection plane by counting the number of points in the voxel which are clustered to that projection plane by the initial segmentation process.
4. Find *nnFilledVoxels,* the nearest-neighboring filled voxels of each filled voxel (within a search radius and/or limited to a maximum number of neighboring voxels) using the KD-Tree partitioning.
5. Calculate a *scoreSmooth* score for each filled voxel by adding up the *voxScoreSmooth* values of the neighboring filled voxels (each voxel is also found as a neighboring voxel of itself by TMC2's KD-Tree): $scoreSmooth \left[v\right] \left[p\right] = {\sum }_{j = 1}^{size \left(nnFilledVoxels\left[v\right]\right)} voxScoreSmooth \left[v\right] \left[p\right]$ where p the is the projection plane index and v = filledVoxel[*i*] is the index of the voxel containing the i-th point. Hence, the *scoreSmooth* score would be the same for all points inside a voxel.
6. Calculate a *scoreNormal* score for each point related to each projected plane: $scoreNormal \left[i\right] \left[p\right] = normal \left[i\right] ⋅ orientation \left[p\right]$ where normal[*i*] is the normal vector of the i-th point, and orientation[p] is the vector of the p-th projection plane.
7. Calculate the final score for each point related to each projection plane as the weighted linear combination of the two scores, as shown below: $score \left[i\right] \left[p\right] = scoreNormal \left[i\right] \left[p\right] + \frac{λ}{size \left(nnFilledVoxels\left[v\right]\right)} \times scoreSmooth \left[v\right] \left[p\right]$ where *v* = filledVoxel[*i*].
8. Cluster each point to the projection plane having the highest final score as calculated at 7.
9. Repeat the above steps for a few iterations.

### Additional Projection Planes

Additional projection planes may be optionally introduced in order to improve the visual, quality of the coded point clouds. In this case each plane is defined by a corresponding normal ***n̅**_{pidx}* with values
- (1.0, 0.0, 0.0),
- (0.0, 1.0, 0.0),
- (0.0, 0.0, 1.0),
- (-1.0, 0.0, 0.0),
- (0.0, -1.0, 0.0),
- (0.0, 0.0, -1.0),
- $\left(0.0, \frac{\sqrt{2}}{2}, \frac{\sqrt{2}}{2}\right) ,$ $\left(0.0,-\frac{\sqrt{2}}{2},\frac{\sqrt{2}}{2}\right) ,$ $\left(0.0,\frac{\sqrt{2}}{2},-\frac{\sqrt{2}}{2}\right) ,$ $\left(0.0,-\frac{\sqrt{2}}{2},-\frac{\sqrt{2}}{2}\right) ,$ $\left(\frac{\sqrt{2}}{2}, 0.0, \frac{\sqrt{2}}{2}\right) ,$ $\left(-\frac{\sqrt{2}}{2},0.0,\frac{\sqrt{2}}{2}\right) ,$ $\left(\frac{\sqrt{2}}{2},0.0,-\frac{\sqrt{2}}{2}\right) ,$ $\left(-\frac{\sqrt{2}}{2},0.0,-\frac{\sqrt{2}}{2}\right) ,$ $\left(\frac{\sqrt{2}}{2},\frac{\sqrt{2}}{2}, 0.0\right) ,$ $\left(-\frac{\sqrt{2}}{2},\frac{\sqrt{2}}{2}, 0.0\right) ,$ $\left(\frac{\sqrt{2}}{2},-\frac{\sqrt{2}}{2}, 0.0\right) ,$ $\left(-\frac{\sqrt{2}}{2},-\frac{\sqrt{2}}{2}, 0.0\right) .$

In the coordination transform process, point is rotated, shifted and quantized. And u, v, d on a patch are calculated.

In aspect of decoding process, coordination inverse transform is applied to patch that belongs to one of the additional projection planes.

### Patch Orientation in 3D Space

The orientation of a patch may be computed such as the rotated points project better on local coordinate system planes. At the decoder side, after decoding the video planes (D0) for each patch, a set of 3D points is obtained. Then, this set is transformed by a local scale, a local rotation and a local translation (encoded as metadata per patch). The result will be the set of 3D points in the global coordinate system. After decoding all the patches and creating, therefore, the 3D point cloud object, it may be possible to apply a global 3D transform (encoded as metadata per frame, or selection of patches within the frame). This last transform is very useful for patches that represent objects that translate (and/or rotate) in the scene.

The effects of the two transforms are cumulated: the first one at the patch level (reconstruct the 3D points belonging to a patch in a local coordinates and then transform them in the world coordinate), the second one at the object level (this is common to all the points of the object and encodes the global translation, orientation, scale).

The effect of the first transformation is formulated as follows:
- If a point P_{patch} belongs to the patch Phᵢ then its coordinates are obtained by first decoding the D0 and then multiplying the result with the 3D transform associated with Phᵢ
   ∘ ${P}_{patch} = {T}_{i} * {P}_{decoded}$

The effect of the second transformation is formulated as follows:
- For all points:
   ∘
   ${P}_{final} = GT * {P}_{patch} \left(width GT global transform-same for all patches\right)$

The cumulative effect is: P_{final} = GT * P_{patch} = GT * Tᵢ * P_{decoded} = (GT * Tᵢ)* P_{decoded}

The center of rotation for the patches in a 3D space would be computed as the center of the bounding box of each patch, using the following patch information:
- 3d coordinates of the patch bounding box (x, y, z), is for example:
   o u1, or pdu_3d_shift_tangent_axis,
   o v1, or pdu_3d_shift_bitangent_axis,
   o d1, or pdu_3d_shift_normal_axis,
- 3d size of the bounding box (width, height an depth), is for example:
   o size_u0, or pdu_2d_delta_size_u,
   o size_v0, or pdu_2d_delta_size_v,
   o geometry depth, max_depth.

In particular, the center of the bounding box of the patch could be computed as follows:
- $center_normal_axis = pdu_ 3 d_shift_normal_axis + max_depth / 2$
- $center_tangent_axis = pdu_ 3 d_shift_normal_axis + pdu_ 2 d_delta_size_u / 2$
- $center _ bitangent _ axis = pdu _ 3 d _ shift _ normal _ axis + pdu _ 2 d _ delta _ size _ v / 2$

The rotation of the patch in a 3Dspace could be defined using quaternions as: 4 tuple of real numbers: w, x, y, z $q = \left[\begin{matrix}w \\ x \\ y \\ z\end{matrix}\right] = \left[\begin{matrix}w \\ v\end{matrix}\right] \begin{matrix}scalar \\ vector\end{matrix}$ same information on axis angles but in a different form $q = \left[\begin{matrix}cos \left(θ/2\right) \\ sin \left(θ/2\right) r\end{matrix}\right]$

The quaternions may have the following characteristics and expressions:

| | |
|---|---|
| Unit quaternion | $\left\|q\right\| = 1$ |
| | ${x}^{2} + {y}^{2} + {z}^{2} + {w}^{2} = 1$ |
| Multiplication | $\left[\begin{matrix}{w}_{1} \\ {v}_{1}\end{matrix}\right] \left[\begin{matrix}{w}_{2} \\ {v}_{2}\end{matrix}\right] = \left[\begin{matrix}{w}_{1} {w}_{2} - {v}_{1} ⋅ {v}_{2} \\ {w}_{1} {v}_{2} + {w}_{2} {v}_{1} + {v}_{1} \times {v}_{2}\end{matrix}\right]$ |
| | ${q}_{1} {q}_{2} \neq {q}_{2} {q}_{1}$ |
| | ${q}_{1} \left({q}_{2}{q}_{3}\right) = \left({q}_{1}{q}_{2}\right) {q}_{3}$ |
| Quaternion and rotation | ${q}_{p} = \left[\begin{matrix}0 \\ p\end{matrix}\right] q = \left[\begin{matrix}cos \left(θ/2\right) \\ sin \left(θ/2\right) r\end{matrix}\right]$ |

If **q** is a unit quaternion and
then **qq*ₚ*q⁻¹** results in p rotating about r by*θ*. $\begin{matrix}{qq}_{p} {q}^{- 1} = \left[\begin{matrix}w \\ v\end{matrix}\right] \left[\begin{matrix}0 \\ p\end{matrix}\right] \left[\begin{matrix}w \\ - v\end{matrix}\right] \\ = \left[\begin{matrix}w \\ v\end{matrix}\right] \left[\begin{matrix}p ⋅ v \\ w p - p \times v\end{matrix}\right] \\ = \left[\begin{matrix}w p ⋅ v - v ⋅ w p + v ⋅ p \times v = 0 \\ w \left(wp-p\times v\right) + \left(p⋅v\right) v + v \times \left(wp-p\times v\right)\end{matrix}\right]\end{matrix}$

If **q₁** and **q₂** are unit quaternion the combined rotaton of first rotating by **q₁** and then by **q₂** is equivalent to: ${q}_{3} = {q}_{2} ⋅ {q}_{1}$

Quaternion and rotation matrix $q = \left[\begin{matrix}w \\ x \\ y \\ z\end{matrix}\right]$ $R \left(q\right) = \left[\begin{matrix}1 - 2 {y}^{2} - 2 {z}^{2} & 2 xy + 2 wz & 2 xz - 2 wy & 0 \\ 2 xy - 2 wz & 1 - 2 {x}^{2} - 2 {z}^{2} & 2 yz + 2 wx & 0 \\ 2 xz + 2 wy & 2 yz - 2 wx & 1 - 2 {x}^{2} - 2 {y}^{2} & 0 \\ 0 & 0 & 0 & 1\end{matrix}\right]$

### Patch Packing

The patch packing process tries to generate the geometry and texture maps, by appropriately considering the generated patches, and by trying to efficiently place the geometry or texture data that correspond to each patch onto a 2D grid of size WxH. Such placement also accounts for a used-defined minimum size block TxT, which specifies the minimum distance between distinct patches as placed on this 2D grid. The corresponding value (T) is encoded and sent to the decoder.

The packing method in V-PCC uses an exhaustive search algorithm as follows:
Initially, patches are placed on a 2D grid in a manner that would guarantee nonoverlapping insertion. Samples belonging to a patch (rounded to a value that is a multiple of T) are considered as occupied blocks.

In addition, a safeguard between adjacent patches is forced to distance of at least one block being multiple of T.

Patches are processed in an orderly manner, based on the patch index list. Each patch from the list is iteratively placed on the grid. The grid resolution depends on the original point cloud size and its width (W) and height (H) are transmitted to the decoder.

In the case that there is no empty space available for the next patch the height value of the grid is initially doubled and the insertion of this patch is evaluated again. If the insertion of all patches is successful, then the height is trimmed to the minimum needed value. However, this value is not allowed to be set lower than the originally specified value in the encoder.

The final values for W and H correspond to the frame resolution that is used to encode the texture and geometry video signals using the appropriate video codec.

### Patch packing using precedence order

The RD performance when reorganizing the patches to use the chosen precedence is similar to original method. However, with the packing precedence rearrangement, decoder does not need to reorder the patches. Furthermore, the method allows to decode the larger patches instantly. The patch precedence is indicated by a binary flag in the bitstream.

### Patch flexible orientation

In order to achieve the compact patch packing on 2d surface flexible patch orientation is allowed. 8 different orientation models are allowed: patch rotated by 0, 90, 180 and 270 degrees, and the mirror image of all those patches. The decoder needs to receive the orientation for the patch to read out the values in the correct order.

### Packing for 3D Region of Interest (ROI)

The 3D ROI packing process creates multiple tile groups per 3D ROI and perform a tile group conformant packing, i.e. requiring patches to be within their associated tile group boundaries and in case of an inter patch, to refer to matched patches from the same tile group.

The occupancy, geometry, and attribute video data unit payloads correspond to video data units (e.g. NAL units defined in ISO/IEC 23008-2) that could be decoded by an appropriate video decoder.

Hence, based on the patch processing parameters described above, the projection information may include one or more of the following parameters:

| Projection related metadata to be signalled | Category | Description |
|---|---|---|
| nnNormalEstimation | 3D Normal Estimation | Number of neighbors of each point used to estimate normals |
| normalOrientation | 3D Normal Estimation | Normal orientation: 0=None, 1=Spanning tree, 2=viewpoint, 3=cubemapprojection |
| maxNNCountRefineSegmentation | Segmentation | Number of neighbors of each point used for refining segmentation |
| iterationCountRefineSegmentation | Segmentation | Number of iterations performed during refine segmentation |
| voxelDimensionRefineSegmentation | Segmentation | Voxel dimension used for refine segmentation (must be a power of 2) |
| searchRadiusRefineSegmentation | Segmentation | Search radius used for refine segmentation |
| minPointCountPerCCPatchSegmentation | Segmentation | Threshold minimum number of points that a connected component should have in order to be retained as a patch |
| maxNNCountPatchSegmentation | Segmentation | Number of nearest neighbors used during connected component extraction |
| maxAllowedDist2RawPointsDetection | Segmentation | Maximum distance for a point to be ignored during raw points detection |
| maxAllowedDist2RawPointsSelection | Segmentation | Maximum distance for a point to be ignored during raw points selection |
| lambdaRefineSegmentation | Segmentation | Determines the smoothness of patch boundries during segmentation refinement |
| minPatchSize | Patch generation | Min patch size for segmentation |
| enablePatchSplitting | Patch generation | Enable patch splitting |
| maxPatchSize | Patch generation | Max patch size for segmentation |
| patchExpansion | Patch generation | Use occupancy map refinement |
| projection Planes | Projection | Projection planes used for segmentation. Base = (1,0,0)(0,1,0)(0,0,1)(-1,0,0)(0,-1,0)(0,0,-1). Enhanced=12 more projection planes defined in section: Additional projection planes. Misc=Any additional projection planes. This variable sets a status(base,enhanced) and then specifies the projection planes used as an array. |
| geometryPadding | Projection | Select the background filling operation for geometry |
| geometryDilation | Projection | Enable dilation for geometry image |
| geometryScale | Projection | Allow rescaling of geometry image |
| patchExpansion | Patch Packing | Use occupancy map refinement for patches |
| patch PackingStrategy | Patch Packing | Specify the packing strategy. 0=default, 1=flexible, 2=tetris |
| patchSortMode | Patch Packing | Specify the patch sorting mode |
| patch PrecendenceOrder | Patch Packing | Specify the patch precedence |
| patchRotation | Patch Packing | Specify the maximum allowed patch rotation |

### Technical effect

These parameters may be used to configure the decoder and provides flexibility in the projection parameters used to encode video attribute data for hybrid point cloud codecs that combine Al based 3D geometry coding with 2D video based attribute coding using ISO/IEC 23090:5. It allows allows custom encoder configurations for patch generation rather than hard coding a fixed configuration.

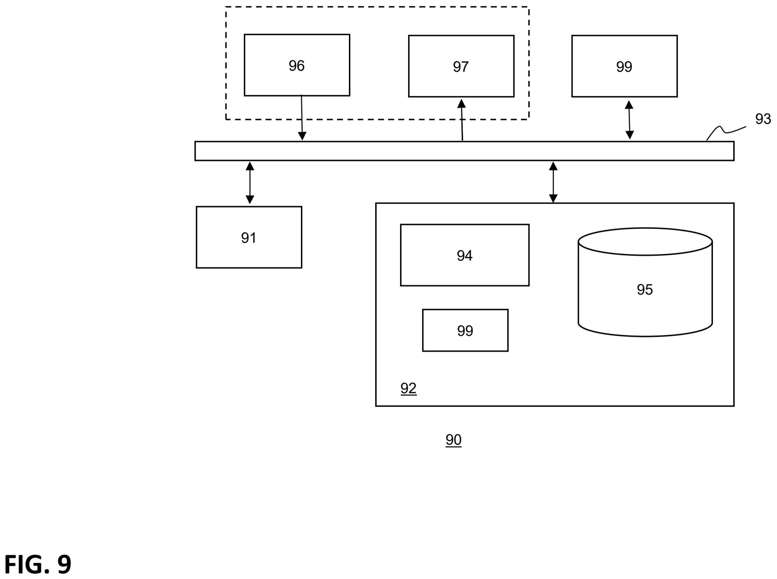

FIG. 9 depicts a block diagram illustrating an exemplary processing system according to a disclosed embodiment, e.g. a (part of a) video processing system 100, 200 as described above. As shown in FIG. 9, the processing system 90 may include at least one processor 91 coupled to memory elements 92 through a system bus 93. As such, the processing system may store program code within memory elements 92. Further, processor 91 may execute the program code accessed from the memory elements 92 via a system bus 93. In one aspect, the processing system may be implemented as a computer that is suitable for storing and/or executing program code. It should be appreciated, however, that the processing system 90 may be implemented in the form of any system including a processor and a memory that is capable of performing the functions described within this specification.

The memory elements 92 may include one or more physical memory devices such as, for example, local memory 94 and one or more bulk storage devices 95. The local memory may refer to random access memory or other non-persistent memory device(s) generally used during actual execution of the program code. A bulk storage device may be implemented as a hard drive or other persistent data storage device. The processing system 90 may also include one or more cache memories (not shown) that provide temporary storage of at least some program code in order to reduce the number of times program code must be retrieved from the bulk storage device 95 during execution.

Input/output (I/O) devices depicted as an input device 66 and an output device 97 optionally can be coupled to the processing system. Examples of input devices may include, but are not limited to, a space access keyboard, a pointing device such as a mouse, or the like. Examples of output devices may include, but are not limited to, a monitor or a display, speakers, or the like. Input and/or output devices may be coupled to the processing system either directly or through intervening I/O controllers.

In an embodiment, the input and the output devices may be implemented as a combined input/output device (illustrated in figure 9 with a dashed line surrounding the input device 66 and the output device 97). An example of such a combined device is a touch sensitive display, also sometimes referred to as a "touch screen display" or simply "touch screen". In such an embodiment, input to the device may be provided by a movement of a physical object, such as e.g. a stylus or a finger of a person, on or near the touch screen display.

A network adapter 98 may also be coupled to the processing system to enable it to become coupled to other systems, computer systems, remote network devices, and/or remote storage devices through intervening private or public networks. The network adapter may comprise a data receiver for receiving data that is transmitted by said systems, devices and/or networks to the processing system 90, and a data transmitter for transmitting data from the processing system 90 to said systems, devices and/or networks. Modems, cable modems, and Ethernet cards are examples of different types of network adapter that may be used with the processing system 90.

As pictured in figure 9, the memory elements 92 may store an application 99. In various embodiments, the application 99 may be stored in the local memory 94, the one or more bulk storage devices 95, or apart from the local memory and the bulk storage devices. It should be appreciated that the processing system 90 may further execute an operating system (not shown in figure 9) that can facilitate execution of the application 99. The application 99, being implemented in the form of executable program code, can be executed by the processing system 90, e.g., by the processor 91. Responsive to executing the application, the processing system 90 may be configured to perform one or more operations or method steps described herein. The application may be an application offering extended reality views.

In one aspect of the present invention, one or more components of the video processing device as depicted in figure 3 may represent processing system 90 as described herein.

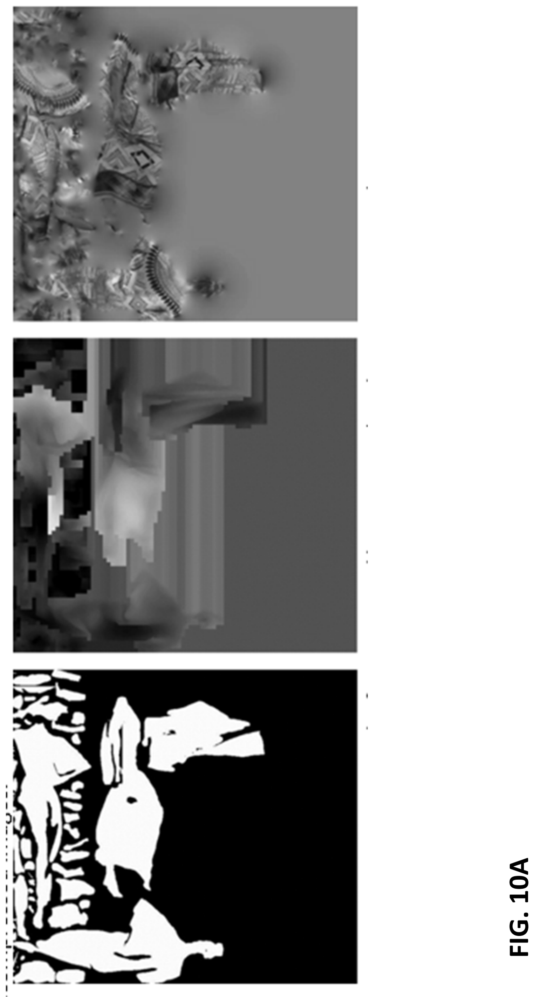

FIGS. 10A-10D are figures and experimental results from applying an embodiment of the disclosed encoding system.

For the experimental setup, point cloud sequences were selected from testing datasets used in MPEG Point Cloud Compression standardization work. These are listed in the following table with details about voxel resolution and number of frames.

| Sequence Name | Voxelization | Static or Dynamic | Frames |
|---|---|---|---|
| Exercise | Vox_10 | Dynamic | 300 |
| Basketball_player | Vox_11 | Dynamic | 300 |
| Thaidancer | Vox_12 | Dynamic | 300 |

Software was used to perform the experiments. For geometry compression, the method described by Lodhi et al for MPEG AI-PCC in ISO/IEC JTC 1/SC 29/WG 7, m70282 was used with the MPEG standard configuration defined in ISO/IEC JTC 1/SC 29/WG 2, CTC on Al-based point cloud coding, MPEG N01122, Jan 2025, Geneva. For the attributes compression, a downscaling factor (DF) x2 was applied for the V-PCC generated video at the encoder side. The system is integrated with the Video based Point Cloud Compression (V-PCC) reference software version 24.0 of N01122. The following Quantization Parameters (QPs):

| Sequence Name | QP1 | QP2 | QP3 | QP4 |
|---|---|---|---|---|
| Exercise | 29 | 27 | 23 | 21 |
| Basketball_player | 28 | 27 | 26 | 23 |
| Thaidancer | 33 | 31 | 30 | 29 |

The performance of the proposed method was evaluated against the V-PCC reference implementation using the following Quantization Parameters (QPs): for the geometry QPs: [20, 24, 28, 32] and for the attributes QPs: [27, 32, 37, 42]. The attribute objective quality of decoded point clouds was calculated using the official MPEG-3DG Metric Software with the following configuration: resolution: Peak Value (i.e. 1024 for Vox_10 sequences); colour: 1; NeighborsProc: 1 and Dropdups: 2.

For training of the attribute neural network, the following applies. The upscaling software is based on Mosr (https://github.com/umzi2/MoSR) work of umzi2 (https://github.com/umzi2 trained to provide an upscaling equal to 2 times the original resolution of the input images. The model has been trained to specialize in upscaling 2D image representations of point clouds. V-PCC was used to extract a 2D representation of a point cloud in three separate video tracks containing geometry, attributes and occupancy information. The attributes related video tracks were the ones used to create a training dataset for the model. The table below shows the set of volumetric point cloud sequences considered and Figure 7A shows an example of conversion from point cloud to geometry (left), Occupancy (middle) and Attributes (right) by processing the volumetric data through V-PCC.

| Sequence Name | Voxelization | Static or Dynamic | Frames |
|---|---|---|---|
| Longdress | Vox_10 | Dynamic | 300 |
| Loot | Vox_10 | Dynamic | 300 |
| Soldier | Vox_10 | Dynamic | 300 |
| Redandblack | Vox_10 | Dynamic | 300 |
| Queen | Vox_10 | Dynamic | 300 |

The training dataset consisted of the standard MPEG Training Dataset for the Al-PCC activities. More specifically, dense dynamic sequences, meaning 300 frames of Loot, Soldier, Redandblack and Queen were selected. All training data was compressed using the V-PCC reference software with attribute QP=27. Each frame is downscaled by 2x using Lanczos resampling interpolation. The network then learns to upscale the image and adjusts the weights by comparing the result to the uncompressed images.

The training has been performed with the setup summarized in the following table:

| | |
|---|---|
| Number of model parameters | 4287600 |
| Model Parameter precision | 32 bit float |
| Training Batch size | 8 |
| Training Learning rate | 1e-3 |
| Epoch size | 600 |
| Peak training memory (MB) | 11337.44 MB |
| | |

For the experimental results, objective quality metrics on which the performance has been evaluated are described below. The following quality metrics were used: Luma PSNR - *Luma;* Blue-difference Chroma - *Chroma Cb* and Red-difference Chroma - *Chroma Cr.*

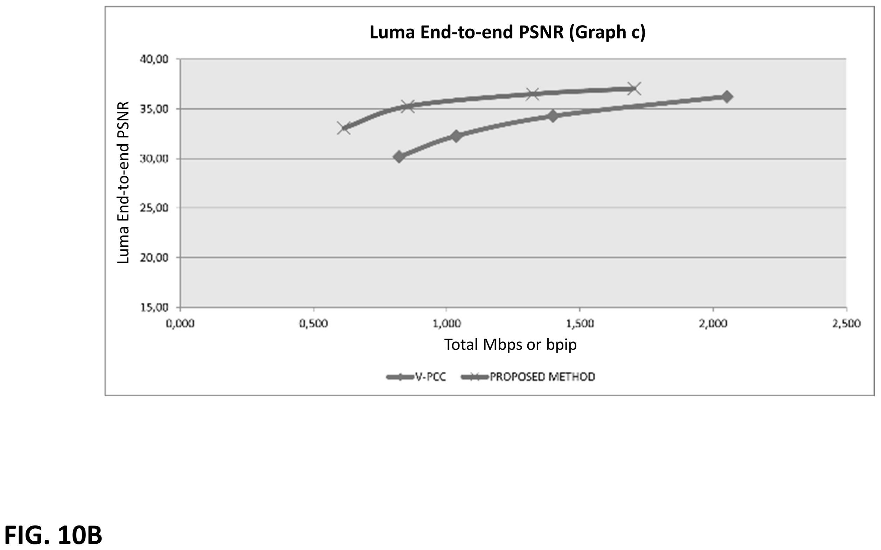

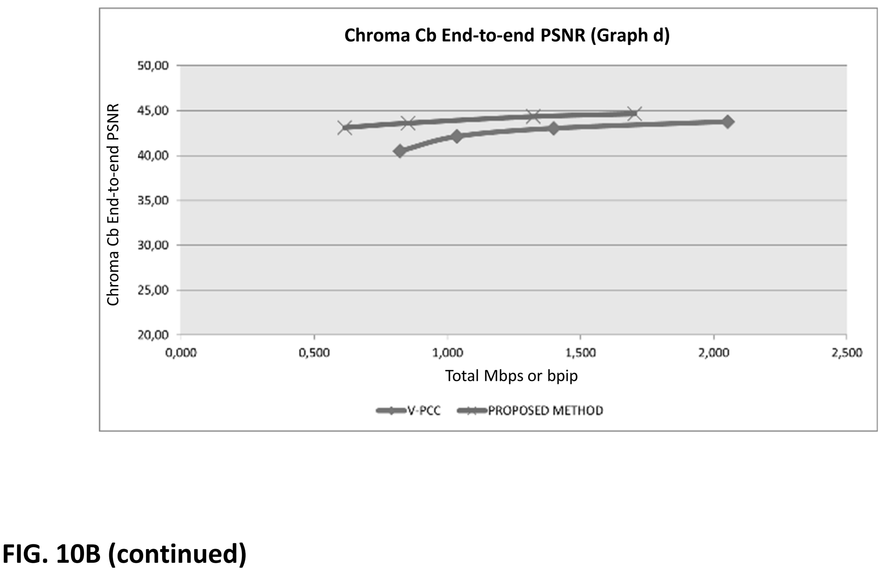

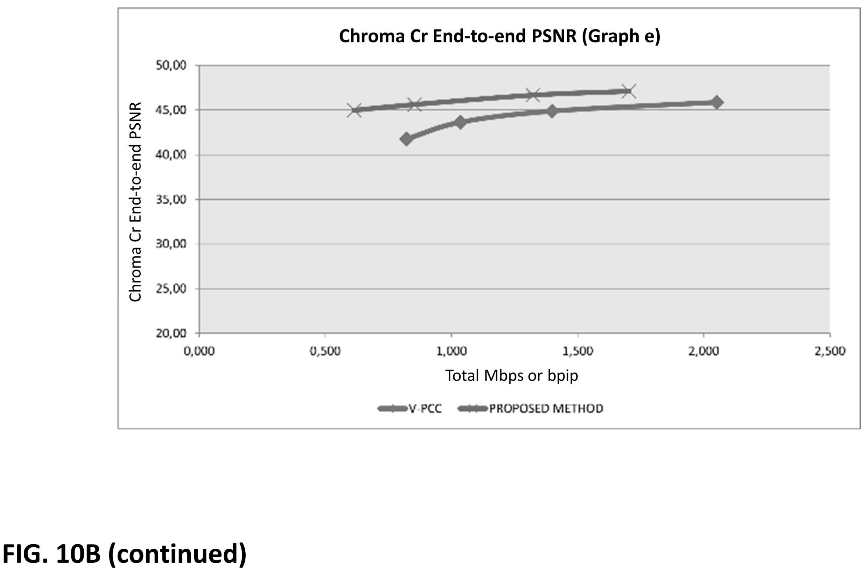

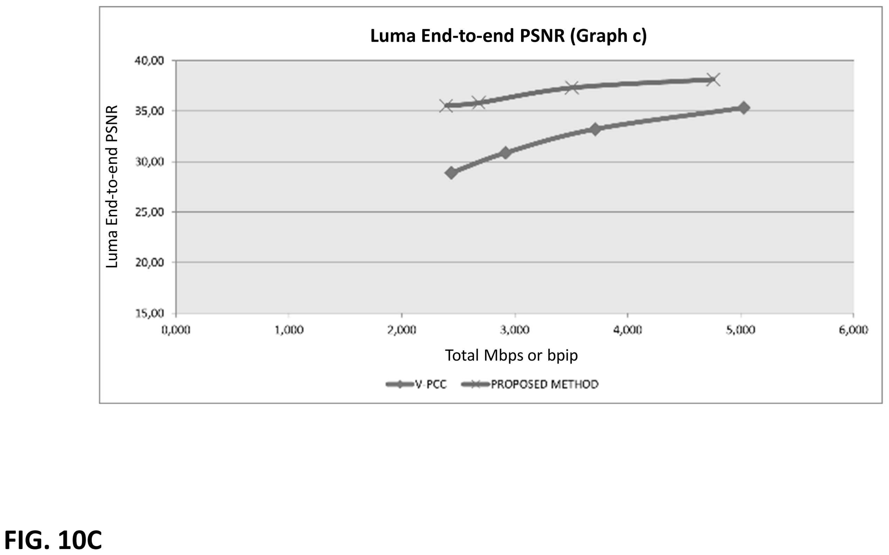

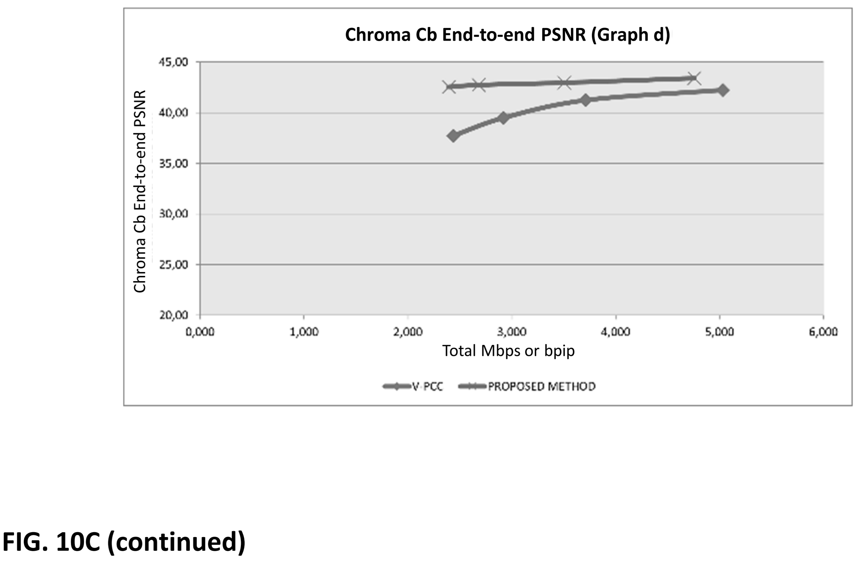

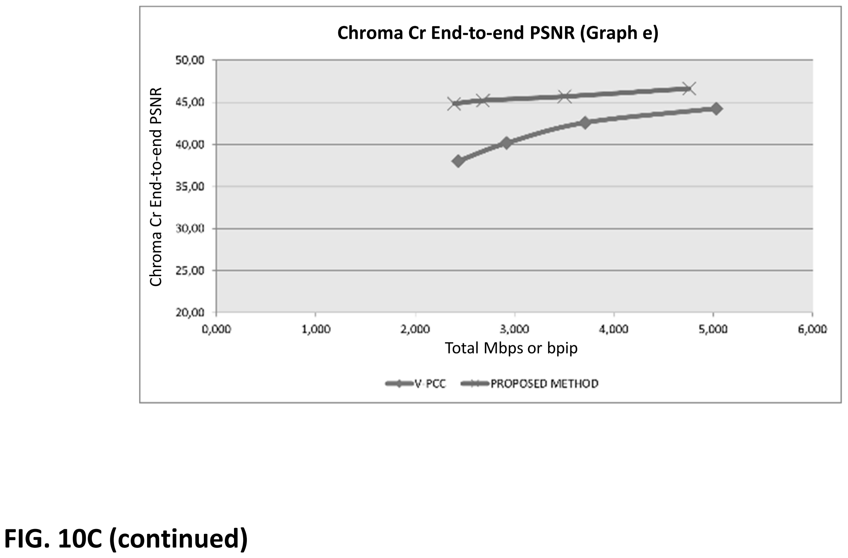

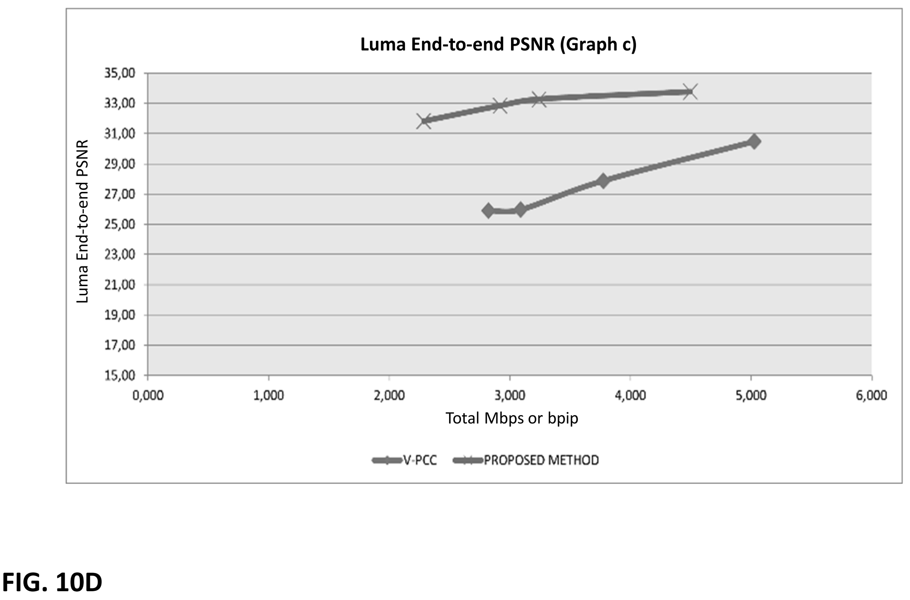

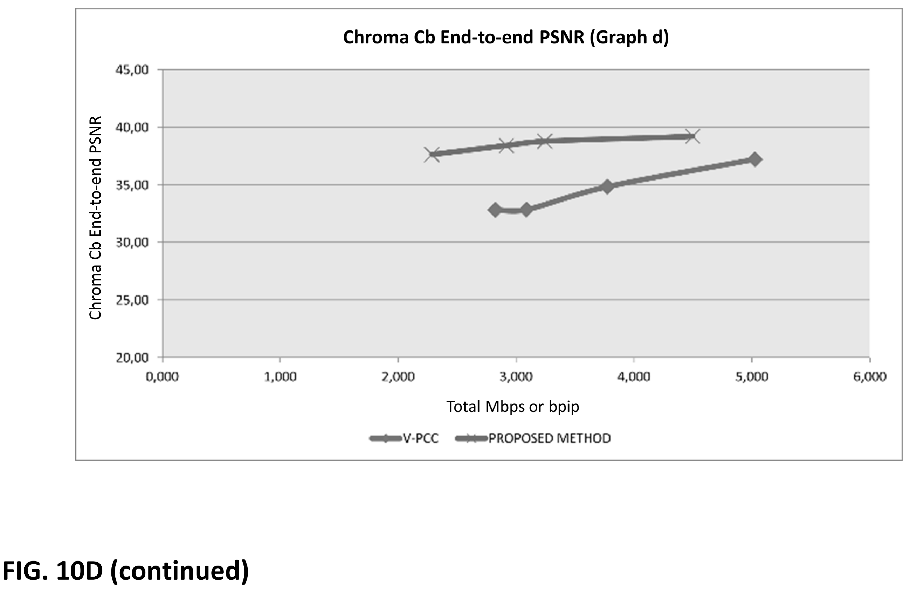

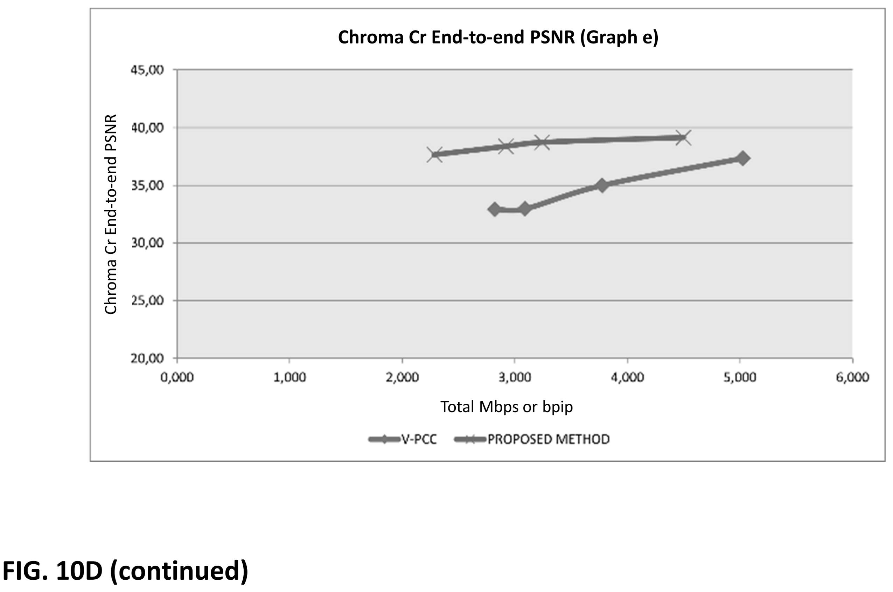

FIGS. 10B-10D show the VSS-PCC rate-distortion curve for each of the objective quality metrics described above. The rate distortion performance was evaluated for the sequences Exercise (FIG. 10B), Basketball_player (FIG. 10C) and Thaidancer (FIG. 10D), and is compared against the same metrics using the V-PCC reference software. FIGS. 10B-10D show the color related PSNR curves (Luma (graph c), Chroma Cb (graph d) and Chroma Cr (graph e) illustrating the improvement that the disclosed system provides when the metrics (each time the upper curve with the cross-shaped points in the diagrams) are compared against V-PCC (each time the lower curves with the diamond-shaped points in the diagrams). The bitrate is evaluated over the total bitstream that, (i) in the case of the disclosed method is the sum of all the components needed to recreate the point clouds at the decoder side, meaning the disclosed attributes bitstream plus the geometry bitstream according to the m70282 contribution, and ii) in the case of V-PCC the same condition applies (all the components needed to recreate the point clouds at the decoder side), meaning the V-PCC compressed bitstream that includes attributes, geometry, occupancy and atlas information.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 61 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration but is not intended to be exhaustive or limited to the implementations in the form disclosed. Many modifications and variations will be apparent to those of ordinary skill in the art without departing from the scope of the claims. The embodiments were chosen and described in order to best explain the principles and some practical applications of the present invention, and to enable others of ordinary skill in the art to understand the present invention for various embodiments with various modifications as are suited to the particular use contemplated.

## Claims

1. A volumetric content data processing system for processing first volumetric content data comprising first volumetric geometry data and first volumetric attribute data, the processing system comprising a memory and at least one processor, coupled to the memory, wherein the at least one processor is configured to:
- perform a first encoding process (ENC-1(G)) on the first volumetric geometry data to obtain encoded volumetric geometry data;
- perform a first decoding process (DEC-1(G)) on the encoded volumetric geometry data to obtain second volumetric geometry data;
- generate video attribute data comprising at least one video attribute frame with attribute patches from the first volumetric attribute data using the second volumetric geometry data;
- generate projection information that is used to generate the video attribute data comprising the at least one video attribute frame with attribute patches;
- execute at least one downscaling operation on the video attribute data to generate second video attribute data;
- perform a second encoding process (ENC-2(A)) on the second video attribute data to generate encoded video attribute data, wherein the second video attribute data is determined in an evaluation process using at least one trained attribute neural network and, optionally, based on at least one evaluation metric;
- provide a bitstream comprising at least the encoded volumetric geometry data and the encoded video attribute data wherein the projection information is contained in the bitstream or associated with the bitstream.

2. The system according to claim 1, wherein the projection information is contained in one or more NAL units, preferably one or more non-VCL NAL units, in the bitstream or in one or more SEI messages in the bitstream.

3. The system according to claim 1 or 2, wherein the projection information includes one or more projection parameters are that are used in the generation of the video attribute data, preferably the generation including projecting 3D volumetric data onto on 2D patches, the one or more projection parameters including at least one of:
- one or more 3D normal estimation parameters
- one or more segmentation parameters
- one or more patch generation parameters
- one or more projection parameters
- one or more patch packing parameters

4. The system according to any of claims claim 1-3, wherein the at least one processor is further configured to:
- execute the evaluation process on the generated video attribute data, wherein the evaluation process comprises one or more cycles of:
- executing the at least one downscaling operation (DS(A)) on the video attribute data to generate downscaled video attribute data;
- executing a process of encoding (ENC-2(A)) and decoding (DEC-2(A)) of the downscaled video attribute data to generate third video attribute data; and
- executing an upscaling evaluation process (US(A)), comprising one or more cycles of:
- upscaling the third video attribute data using the at least one trained attribute neural network (NN-A-n) to generate upscaled video attribute data;
- determining the at least one evaluation metric for the upscaled video attribute data,
wherein the at least one processor is further configured to:
- select the trained attribute neural network (NN-A-n) based on the determined at least one evaluation metric;
- provide the bitstream comprising the encoded attribute video data representing the encoded second video attribute data determined in accordance with the evaluation metric;
- provide attribute neural network information (NN-A) representing the selected trained attribute neural network.

5. The system according to claim 4, wherein the at least one processor is further configured to determine the at least one attribute metric as the evaluation metric for the upscaled video attribute data based on a comparison of the upscaled video attribute data with the generated video attribute data comprising the at least one video attribute frame with attribute patches.

6. The system according to one or more of the claims 1-5, wherein the at least one processor is further configured to determine the at least one evaluation metric for the upscaled video attribute data based on a comparison of third volumetric content data with the first volumetric content data, wherein the third volumetric content data is obtained by:
- generating video geometry data comprising at least on video geometry frame with geometry patches and occupancy data from the second volumetric geometry data;
- performing a mapping operation on the upscaled video attribute data, the video geometry data and the occupancy data to generate the third volumetric content data.

7. The system according to one or more of the preceding claims, wherein the at least one processor is configured to:
- generate reconstructed volumetric attribute data from the second volumetric geometry data and the first volumetric content data; and
- generate the video attribute data comprising at least one video frame with attribute patches from the reconstructed volumetric attribute data;
- and, optionally, generate geometry video data comprising at least one geometry video frame with geometry patches and occupancy data based the second volumetric geometry data.

8. A volumetric content data processing system for processing a bitstream comprising encoded volumetric geometry data and encoded video attribute data, representing volumetric attribute data, the bitstream further comprising or being associated with projection information that was used to generate the encoded video attribute data: the processing system comprising a memory and at least one processor, coupled to the memory, wherein the at least one processor is configured to:
- perform a first decoding operation (DEC-1(G)) on the encoded volumetric geometry data of the bitstream to obtain second volumetric geometry data and on or more projection parameters ;
- generate at least video geometry data comprising at least one video geometry frame with geometry patches and occupancy data based on the second volumetric geometry data and the projection information;
- perform a second decoding operation (DEC-2(A)) on the encoded video attribute data of the bitstream to obtain second video attribute data comprising at least one video attribute frame with attribute patches;
- perform an upscaling operation (US(A)) on the second video attribute data to obtain first video attribute data using at least one trained attribute neural network; and
- generate first volumetric content data using a mapping operation on the video geometry data, the first video attribute data and the occupancy data.

9. The system according to claim 8, wherein the projection information is contained in one or more NAL units, preferably one or more non-VCL NAL units, in the bitstream or in one or more SEI messages in the bitstream.

10. The system according to claims 8 or 9, wherein the projection information includes one or more projection parameters are that are used in the generation of the video attribute data, preferably the generation including projecting 3D volumetric data onto on 2D patches, the one or more projection parameters including at least one of:
- one or more 3D normal estimation parameters
- one or more segmentation parameters
- one or more patch generation parameters
- one or more projection parameters
- one or more patch packing parameters

11. The system according to any of claims 8-10, wherein the at least one processor is further configured to:
- receive attribute neural network information associated with a selected trained attribute neural network;
- execute the upscaling operation on the second video attribute data using the selected attribute neural network in accordance with the received information to generate the first video attribute data.

12. The system according to any of claims 8-11, wherein the at least one processor is further configured to perform the first decoding operation using a geometry neural network module to obtain the second volumetric geometry data.

13. The system according to any of claims 8-12, wherein the at least one processor is configured to:
- further generate video attribute data with default attribute patches in addition to the video geometry data and the occupancy data based on default volumetric attribute data;
- substitute the video attribute data with default attribute patches by the first video attribute data before performing the mapping operation.

14. The system according to any of claims 8-13, wherein the at least one processor is configured to add the first video attribute data from the upscaling operation to the video geometry data and the occupancy data before performing the mapping operation, and wherein, optionally, generation of at least video geometry data with geometry patches and occupancy data based on the second volumetric geometry data uses at least one of:
- an attribute data absence notification notifying the generation process on the absence of attribute data; or
- an attribute data removal operation removing attribute data before performing the mapping operation.

15. The system according to any of claims 8-14, wherein the at least one processor is further configured to generate the first volumetric content data using the mapping operation and the second volumetric geometry data.
